(19) Europäisches Patentamt
European Patent Office
Office européen des brevets

(11) EP 2 700 657 A1

(12) **EUROPÄISCHE PATENTANMELDUNG**

(43) Veröffentlichungstag:
**26.02.2014 Patentblatt 2014/09**

(51) Int Cl.:
***C08B 37/00*** *(2006.01)*

(21) Anmeldenummer: **12181751.4**

(22) Anmeldetag: **24.08.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder:
- **aevotis GmbH**
  **14473 Potsdam (DE)**
- **Fraunhofer Gesellschaft zur Förderung der angewandten Forschung e.V.**
  **80686 München (DE)**

(72) Erfinder:
- **Landschütze, Volker**
  **12203 Berlin (DE)**
- **Radosta, Sylvia**
  **14558 Nuthetal (DE)**
- **Vorwerg, Waltraud**
  **14469 Potsdam (DE)**

(74) Vertreter: **Beyer, Andreas**
**Patentanwälte Bressel und Partner mbB**
**Potsdamer Platz 10**
**10785 Berlin (DE)**

(54) **Alternan-Polysaccharid, das mit protonierbaren Stickstoffgruppen oder permanent positiv geladenen Stickstoffgruppen funktionalisiert ist**

(57) Funktionalisiertes Alternan-Polysaccharid, dadurch gekennzeichnet, dass es protonierbare Stickstoffgruppen oder permanent positiv geladene Stickstoffgruppen als funktionelle Gruppen aufweist. und beispielsweise durch die folgende Formel beschrieben werden kann

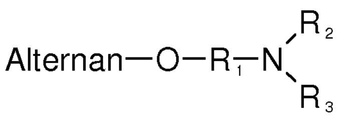

(I)

wobei
$R_1$ eine Kohlenwasserstoffgruppe mit 1 bis etwa 100 Kohlenstoffatomen ist, die ein oder mehrere Heteroatome aufweisen kann,
$R_2$ und $R_3$ jeweils Wasserstoff oder eine Kohlenwasserstoffgruppe mit 1 bis etwa 20 Kohlenstoffatomen, die ein oder mehrere Heteroatome aufweisen kann, sind, wobei $R_2$ und $R_3$ gleich oder unterschiedlich sein können.
oder $R_2$ und $R_3$ zusammen mit dem Stickstoff, an den sie gebunden sind, einen 4-8 gliedrigen heterocyclischen Ring bilden, der mit einem oder mehreren weiteren isocyclischen oder heterocyclischen Ringen kondensiert sein kann, wobei der Stickstoff durch eine Doppelbindung an einen der $R_2$ oder $R_3$ gebunden sein kann und dann eine positive Ladung trägt, wobei der Stickstoff in Formel (I) optional protoniert ist, und
wobei an dem Alternan eine oder mehrere der Gruppen —$R_1NR_2R_3$ vorhanden sein können und in mehreren solcher Gruppen die Reste $R_1$, $R_2$ und $R_3$ unabhängig voneinander gewählt sein können.

EP 2 700 657 A1

## Beschreibung

Die vorliegende Erfindung betrifft ein Alternan-Polysaccharid, das mit protonierbaren Stickstoffgruppen oder permanent positiv geladenen Stickstoffgruppen funktionalisiert ist, ein Verfahren zu seiner Herstellung und Verwendungen dafür.

Alternan (CAS Registrierungs Nr.: 136510-13-9) ist ein Saccharid, das aus Anhydroglucoseeinheiten aufgebaut ist, die vorwiegend alternierend über α-1,3- und α-1,6-glycosidische Bindungen verknüpft sind. Daher gehört Alternan zur Gruppe der α-Glucane. Alternan sowie Verfahren zur Herstellung von Alternan sind aus dem Stand der Technik bekannt und z.B. beschrieben in Jeanes et al. (1954) J. Am. Chem. Soc., 76: 5041-5052, Misaki et al. (1980) Carbohydr. Res., 84: 273-285, Cote and Robyt (1982), Carbohydr. Res. , 101: 57-74, Cote (1992), Carbohydrate Polymers 19, 249-252, WO 00/47727, US 5,702,942, US20060127328, PCT/EP2008/051760.

Der Stand der Technik beschreibt derivatisertes Alternan. Aus WO2010043423A1 sind Alternan-Carbonsäureester und ihre Verwendung als Emulgatoren bekannt.

Die Aufgabe der vorliegenden Erfindung besteht darin, ein Alternan mit neuartigen Eigenschaften zur Verfügung zu stellen. Es sollten neuartige Eigenschaften erzielt werden, welche das Alternan für bestimmte Anwendungen geeignet macht.

Diese Aufgabe wird durch das in Patentanspruch 1 bezeichnete funktionalisierte Alternan gelöst. Die Unteransprüche zu Anspruch 1 geben spezielle Ausführungsformen des funktionalisierten Alternans an.

Angegeben wird ein funktionalisiertes Alternan-Polysaccharid, dadurch gekennzeichnet, dass es protonierbare Stickstoffgruppen oder permanent positiv geladene Stickstoffgruppen als funktionelle Gruppen aufweist. In beiden Fällen ist ein kationisches Alternan erhältlich. Im Fall einer protonierbaren Stickstoffgruppe ist ein kationisches Alternan durch Protonierung erhältlich. Von der Erfindung umfasst sind aber sowohl protonierte wie unptotonierte Formen.

Der Begriff "Stickstoffgruppe" bezeichnet abkürzend eine funktionelle Gruppe, die mindestens ein Stickstoffatom enthält.

Die genannten Stickstoffgruppen sind vorzugsweise ausgewählt aus primären Amingruppen, sekundären Amingruppen, tertiären Amingruppen, quartären Ammoniumgruppen, oder Iminocarbamatgruppen.

Protonierbare Stickstoffgruppen und permanent positiv geladene Stickstoffgruppen werden in dieser Anmeldung zusammenfassend auch mit dem Begriff "Stickstoffgruppen" bezeichnet.

Der Begriff "protonierbare Stickstoffgruppe" bedeutet, dass die Gruppe am Stickstoff selbst protonierbar ist.

Die vorliegende Erfindung betrifft somit ein funktionalisiertes Alternan-Polysaccharid, das funktionelle Stickstoff-Gruppen trägt, die entweder unter bestimmten pH Bedingungen nach Protonierung kationische Gruppen sind, oder die permanent kationische Gruppen sind.

Die Begriffe "quartäre Ammoniumgruppe" und der Begriff "quartäre Amingruppe" bezeichnen zum Zweck der Beschreibung dieser Erfindung dieselbe funktionelle Gruppe. Eine quartäre Ammoniumgruppe bezeichnet eine Ammoniumgruppe mit einem quartären Stickstoffatom, das organische Reste und eine permanente positive Ladung aufweist.

Der Begriff "Stickstoffgruppen-funktionalisiertes Alternan" bezeichnet in dieser Erfindung ein Alternan, an das durch einen chemischen Prozess protonierbare Stickstoffgruppen oder permanent positiv geladenen Stickstoffgruppen angebunden wurden. Statt des Begriffes "Stickstoffgruppen-funktionalisiertes Alternan" wird in gleichbedeutender Weise abkürzend auch der Begriff "funktionalisiertes Alternan" verwendet. Ein anderer Ausdruck für "funktionalisiertes Alternan" ist der Begriff "derivatisiertes Alternan".

Es wurde überraschenderweise gefunden, dass das funktionalisierte Alternan-Polysaccharid, oder spezielle Ausführungsformen davon, die folgenden vorteilhaften Eigenschaften aufweisen:

- sehr gute Wasserlöslichkeit
- erhöhte Transparenz im Vergleich zu unmodifiziertem Alternan
- Herstellbarkeit konzentrierter wässriger Lösungen mit um Größenordnungen höherer Viskosität im Vergleich zum unmodifizierten Alternan
- Herstellbarkeit von Hydrogelen mit hoher Transparenz
- Herstellbarkeit von Symplexstrukturen, wobei mit Simplexstrukturen Komplexe mit anionischen Polymeren bezeichnet sind

Der Begriff "Alternan" bezeichnet einen Stoff, der eingangs bereits definiert wurde. Unter dem Begriff "Alternan" sind in dieser Erfindung Alternanpolysaccharide zu verstehen. Statt des Begriffes "Alternan-Polysaccharid" wird nachfolgend auch verkürzend der Begriff "Alternan" gebraucht, der zum Zwecke der nachfolgenden Beschreibung der Erfindung das Polysaccharid bezeichnen soll. Der Begriff "Polysaccharid" bedeutet ein Polysaccharid mit einer mittleren Molmasse (Gewichtsmittel des Molekulargewichts) Mw von mindestens 3000 g/mol, vorzugsweise mindestens 5000 g/mol.

In einer Ausführungsform wird ein funktionalisiertes Alternan angegeben, dessen Moleküle überwiegend oder

ausschließlich einen Polymerisationsgrad (DP) von mindestens 10, vorzugsweise mindestens 100, oder mindestens 1000, oder mindestens 10000, oder mindestens 100000, noch mehr bevorzugt mindestens 150000 aufweisen. Der Begriff "überwiegend" bedeutet in einer bevorzugten Definition, dass der Anteil der Alternan-Moleküle mit dem angegebenen Mindest-DP mehr als 95 Gew.-% beträgt, bezogen auf des Gesamtgewicht aller Alternanmoleküle, mehr bevorzugt mehr als 97 Gew.-%, noch mehr bevorzugt mehr als 99 Gew.-%.

In einer speziellen Ausführungsform, die mit der vorherigen und weiteren Ausführungsformen kombinierbar ist, weist das funktionalisierte Alternan eine mittlere Molmasse Mw im Bereich von 3.000 g/mol bis 60.000.000 g/mol auf, noch mehr bevorzugt 5.000 g/mol bis 60.000.000 g/mol, 10.000 g/mol bis 60.000.000 g/mol, oder 20.000 g/mol bis 60.000.000 g/mol, am meisten bevorzugt 50.000 g/mol bis 60.000.000 g/mol, 100.000 g/mol bis 60.000.000 g/mol oder 500.000 g/mol bis 60.000.000 g/mol.

Weitere Bereiche sind 1.000.000 g/mol bis 60.000.000 g/mol, 5.000.000 g/mol bis 60.000.000 g/mol oder 10.000.000 g/mol bis 60.000.000 g/mol

In noch einer weiteren bevorzugten Ausführungsform weist das funktionalisierte Alternan eine mittlere Molmasse Mw im Bereich von 12.000.000 bis 30.000.000 g/mol, mehr bevorzugt 14.000.000 bis 28.000.000 g/mol, noch mehr bevorzugt 16.000 000 bis 26.000.000 g/mol, am meisten bevorzugt 19.000.000 bis 23.000.000 g/mol. Nicht funktionalisierter Alternan-Ausgangsstoff mit einem solchen Mw kann mit Hilfe einer verkürzten Alternansucrase hergestellt werden. Die verkürzten Alternansucrasen, das Herstellungsverfahren für solches spezielles Alternan sowie das Alternan sind beschrieben in der internationalen Anmeldung PCT/EP2008/051760, auf welche hier ausdrücklich verwiesen wird.

Methoden zur Bestimmung der mittleren Molmasse (Mw) sind dem Fachmann bekannt und umfassen z.B. Bestimmungsmethoden mittels GPC (Gel Permeations Chromatographie) gekoppelt mit entsprechenden Detektionsverfahren wie Differentialrefraktometer und MALLS (Multi Angle Laser Light Scattering). Eine im Zusammenhang mit der vorliegenden Erfindung bevorzugte Methode zur Bestimmung der Molmassenverteilung (MMD) und des Gewichtsmittels der Molmasse (Mw) mit GPC-MALLS ist unter dem Kapitel "Allgemeine Methoden", beschrieben.

Die nachfolgend anhand spezieller Ausführungsformen genannten Begriffe haben die nachfolgende Bedeutung:

In den obigen und nachfolgenden Formeln bezeichnet der Begriff "Alternan" ein Alternan-Polysacharidmolekül. Der mit "Alternan" verbundene Sauerstoff ist ein Sauerstoff aus einer Hydroxygruppe des nicht funktionalisierten Alternans. Anhydroglucoseeinheiten des Alternans können an den freien OH-Gruppen in der C-2, C-3, C-4 und/oder C-6 Position funktionalisiert werden. Durch den alternierenden Bindungstyp des Alternans stehen jeweils alle OH-Gruppen der C-2 und C-4 Position der Anhydroglucoseeinheiten und jeweils ca. 50% der OH-Gruppen der C-3 und C-6 Position für eine Funktionalisierung zur Verfügung. Erfindungsgemäße funktionalisierte Alternane enthalten daher vorwiegend Funktionalisierungen an der C-2, C-3, C-4 und/oder der C-6 Position der Anhydroglucoseeinheiten des Polymers.

Unter dem Begriff "Alkylgruppe" wird in der vorliegenden Erfindung eine monovalente, lineare oder verzweigte, gesättigte Kohlenwasserstoffgruppe verstanden. Eine Alkylgruppe kann mit einer oder mehreren funktionellen Gruppen substituiert sein, die ausgewählt sind aus Oxo-, Hydroxy, Alkoxy, Carboxy, Aldehyd, Amino, Monoalkylamino-, Dialkylamino, Nitro, Fluor, Chlor, Brom und/oder Jod. Besonders bevorzugte Alkylengruppen sind Methyl ($-CH_3$), Ethyl ($-CH_2CH_3$), Propyl ($-CH_2CH_2CH_3$), Isopropyl ($-CH(CH_3)_2$), Butyl ($-CH_2CH_2CH_2CH_3$), Isobutyl ($-CH_2CH(CH_3)CH_3$), und tert-Butyl.

Unter dem Begriff "Alkylengruppe" wird in der vorliegenden Erfindung eine divalente, lineare oder verzweigte, gesättigte Kohlenwasserstoffgruppe verstanden. Eine Alkylengruppe kann einen oder mehrere Substituenten aufweisen wie oben bei einer Alkylgruppe beschrieben. Besonders bevorzugte Alkylengruppen sind Methylen ($-CH_2-$), Ethylen ($-CH_2CH_2-$), Propylen ($-CH_2CH_2CH_2-$), Isopropylen ($-CH_2CH(CH_3)-$), Butylen ($-CH_2CH_2CH_2CH_2-$), Isobutylen ($-CH_2CH(CH_3)CH_2-$), wobei Methylen am meisten bevorzugt ist.

Unter dem Begriff "Alkenylgruppe" wird in der vorliegenden Erfindung eine monovalente, lineare oder verzweigte, Kohlenwasserstoffgruppe verstanden, die eine oder mehrere C-C-Doppelbindungen aufweist. Eine Alkenylgruppe kann einen oder mehrere Substituenten aufweisen wie oben bei einer Alkylgruppe beschrieben. Eine bevorzugte Alkenylgruppe ist Ethenyl ($CH_2=CH-$), auch bezeichnet als "Vinyl".

Unter dem Begriff "Alkenylengruppe" wird in der vorliegenden Erfindung eine divalente, lineare oder verzweigte, Kohlenwasserstoffgruppe verstanden, die eine oder mehrere C-C-Doppelbindungen aufweist. Eine Alkenylengruppe kann einen oder mehrere Substituenten aufweisen, wie oben bei einer Alkylgruppe beschrieben.

Unter dem Begriff "Alkinylgruppe" wird in der vorliegenden Erfindung eine monovalente, lineare oder verzweigte, Kohlenwasserstoffgruppe verstanden, die eine oder mehrere C-C-Dreifachbindungen aufweist. Eine Alkinylgruppe kann einen oder mehrere Substituenten aufweisen, wie oben bei einer Alkylgruppe beschrieben. Ein Beispiel ist die Ethinylgruppe ($H-C\equiv C-$).

Unter dem Begriff "Alkinylengruppe" wird in der vorliegenden Erfindung eine divalente, lineare oder verzweigte, Kohlenwasserstoffgruppe verstanden, die eine oder mehrere C-C-Dreifachbindungen aufweist. Eine Alkinylengruppe

kann einen oder mehrere Substituenten aufweisen, wie oben bei einer Alkylengruppe beschrieben.

Unter dem Begriff "Cycloalkylgruppe" wird in der vorliegenden Erfindung eine monovalente gesättigte oder teilweise ungesättigte, nicht-aromatische, carbocyclische Gruppe verstanden, die vorzugsweise aus mono-, bi- oder tricyclischen Kohlenstoffringen besteht, wobei die Cyclen kondensiert oder anderweitig verknüpft sein können. Eine Cycloalkylengruppe kann einen oder mehrere Substituenten aufweisen wie oben bei einer Alkylgruppe beschrieben. Ferner kann eine Cylcloalkylgruppe auch Alkyl-, Alkenylgruppen oder Alkinylgruppen, wie oben definiert, als Substituenten aufweisen.

Unter dem Begriff "Cycloalkylengruppe" wird in der vorliegenden Erfindung eine divalente gesättigte oder teilweise ungesättigte, nicht-aromatische, carbocyclische Gruppe verstanden, die vorzugsweise aus mono-, bi- oder tricyclischen Kohlenstoffringen besteht, wobei die Cyclen kondensiert oder anderweitig verknüpft sein können. Eine Cycloalkylengruppe kann einen oder mehrere Substituenten aufweisen wie oben bei einer Alkylgruppe beschrieben. Ferner kann eine Cylcloalkylengruppe auch Alkyl-, Alkenylgruppen oder Alkinylgruppen, wie oben definiert, als Substituenten aufweisen.

Unter dem Begriff "Hetero-Cycloalkylgruppe" wird in der vorliegenden Erfindung eine monovalente gesättigte oder teilweise ungesättigte, nicht-aromatische, carbocyclische Gruppe verstanden, die vorzugsweise aus mono-, bi- oder tricyclischen Kohlenstoffringen besteht, wobei die Cyclen kondensiert oder anderweitig verknüpft sein können, und wobei weiterhin einer oder mehrere Kohlenstoffatome aus dem Ringsystem durch ein Heteroatom ersetzt sind, insbesondere Stickstoff, Sauerstoff oder Schwefel. Eine Hetero-Cycloalkylengruppe kann einen oder mehrere Substituenten aufweisen wie oben bei einer Alkylgruppe beschrieben. Ferner kann eine Hetero-Cycloalkylgruppe auch Alkyl-, Alkenylgruppen oder Alkinylgruppen, wie oben definiert, als Substituenten aufweisen.

Unter dem Begriff "Hetero-Cycloalkylengruppe" wird in der vorliegenden Erfindung eine divalente gesättigte oder teilweise ungesättigte, nicht-aromatische, carbocyclische Gruppe verstanden, die vorzugsweise aus mono-, bi- oder tricyclischen Kohlenstoffringen besteht, wobei die Cyclen kondensiert oder anderweitig verknüpft sein können, und wobei weiterhin eines oder mehrere Kohlenstoffatome aus dem Ringsystem durch ein Heteroatom ersetzt sind, insbesondere Stickstoff, Sauerstoff oder Schwefel. Eine Hetero-Cycloalkylengruppe kann einen oder mehrere Substituenten aufweisen wie oben bei einer Alkylgruppe beschrieben. Ferner kann eine Hetero-Cycloalkylengruppe auch Alkyl-, Alkenylgruppen oder Alkinylgruppen, wie oben definiert, als Substituenten aufweisen.

Unter dem Begriff "Arylgruppe" wird in der vorliegenden Erfindung eine monovalente cyclische aromatische Gruppe verstanden, die vorzugsweise mono-, bi oder tricyclisch sein kann, wobei die Cyclen kondensiert oder anderweitig durch C-C Bindungen verknüpft sein können. Beispiele sind Phenyl, Naphthyl, Biphenyl, Anthracyl und Phenantryl. Eine Arylgruppe kann einen oder mehrere Substituenten aufweisen wie oben bei einer Alkylgruppe beschrieben. Ferner kann eine Arylgruppe auch Alkyl-, Alkenylgruppen oder Alkinylgruppen, wie oben definiert, als Substituenten aufweisen.

Unter dem Begriff "Arylengruppe" wird in der vorliegenden Erfindung eine divalente cyclische aromatische Gruppe verstanden, die vorzugsweise mono-, bi oder tricyclisch sein kann, wobei die Cyclen kondensiert oder anderweitig durch C-C Bindungen verknüpft sein können. Beispiele sind Phenylen, Naphthylen, Biphenylen, Anthracylen und Phenantrylen. Eine Arylengruppe kann einen oder mehrere Substituenten aufweisen wie oben bei einer Alkylgruppe beschrieben. Ferner kann eine Arylengruppe auch Alkyl-, Alkenylgruppen oder Alkinylgruppen, wie oben definiert, als Substituenten aufweisen.

Unter dem Begriff "Hetero-Arylgruppe" wird in der vorliegenden Erfindung eine monovalente cyclische aromatische Gruppe verstanden, die vorzugsweise mono-, bi oder tricyclisch ist, wobei die Cyclen kondensiert oder anderweitig durch C-C Bindungen verknüpft sein können, und wobei weiterhin eines oder mehrere Kohlenstoffatome aus dem Ringsystem durch ein Heteroatom ersetzt sind, insbesondere Stickstoff, Sauerstoff oder Schwefel. Eine Hetero-Arylengruppe kann einen oder mehrere Substituenten aufweisen wie oben bei einer Alkylgruppe beschrieben. Ferner kann eine Hetero-Arylgruppe auch Alkyl-, Alkenylgruppen oder Alkinylgruppen, wie oben definiert, als Substituenten aufweisen.

Unter dem Begriff "Hetero-Arylengruppe" wird in der vorliegenden Erfindung eine divalente cyclische aromatische Gruppe verstanden, die vorzugsweise mono-, bi oder tricyclisch ist, wobei die Cyclen kondensiert oder anderweitig durch C-C Bindungen verknüpft sein können, und wobei weiterhin einer oder mehrere Kohlenstoffatome aus dem Ringsystem durch ein Heteroatom ersetzt sind, insbesondere Stickstoff, Sauerstoff oder Schwefel. Eine Hetero-Arylengruppe kann einen oder mehrere Substituenten aufweisen wie oben bei einer Alkylgruppe beschrieben. Ferner kann eine Hetero-Arylengruppe auch Alkyl-, Alkenylgruppen oder Alkinylgruppen, wie oben definiert, als Substituenten aufweisen.

In einer Ausführungsform wird ein funktionalisiertes Alternan-Polysaccharid angegeben, das Strukturen der folgenden Formel (I) aufweist:

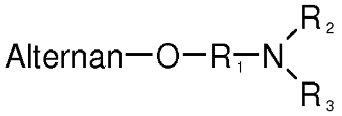

(I)

wobei

$R_1$ eine Kohlenwasserstoffgruppe mit 1 bis etwa 100 Kohlenstoffatomen ist, die ein oder mehrere Heteroatome aufweisen kann,
$R_2$ und $R_3$ jeweils Wasserstoff oder eine Kohlenwasserstoffgruppe mit 1 bis etwa 20 Kohlenstoffatomen, die ein oder mehrere Heteroatome aufweisen kann, sind, wobei $R_2$ und $R_3$ gleich oder unterschiedlich sein können, oder $R_2$ und $R_3$ zusammen mit dem Stickstoff, an den sie gebunden sind, einen 4-8 gliedrigen heterocyclischen Ring bilden, der mit einem oder mehreren weiteren isocyclischen oder heterocyclischen Ringen kondensiert sein kann, wobei der Stickstoff durch eine Doppelbindung an einen der $R_2$ oder $R_3$ gebunden sein kann und dann eine positive Ladung trägt.

An dem Alternan können eine oder mehrere der Gruppen $-R_1NR_2R_3$ vorhanden sein und in mehreren solcher Gruppen können die Reste $R_1$, $R_2$ und $R_3$ unabhängig voneinander gewählt sein. Der Sauerstoff zwischen "Alternan" und der Gruppe $-R_1NR_2R_3$ ist ein Sauerstoff aus einer Hydroxygruppe des nicht-funktionalisierten Alternans. Die Gruppe $-R_1NR_2R_3$ ist somit über einen solchen Sauerstoff mit dem Alternanrückgrat, d.h. mit dem Rückgrat des Alternan-Polysaccharids, verbunden.

In dieser Ausführungsform ist die Gruppe $-R_1NR_2R_3$ eine primäre, sekundäre oder tertiäre Amingruppe. Diese kann protoniert werden, wodurch ein kationisch funktionalisiertes Alternan erhalten wird, welches ebenfalls von der Erfindung umfasst ist.

$R_1$ bezeichnet eine Kohlenwasserstoffgruppe, wobei diese neben Kohlenstoff und Wasserstoff auch ein oder mehrere Heteroatome aufweisen kann. Bevorzugte Heteroatome sind, ohne Beschränkung, O, N, S, P, F, Cl, Br, I. Ein Heteroatom kann in eine Kohlenstoffkette oder ein Kohlenstoffrückgrat integriert sein, sodass die Kohlenstoffkette/das Rückgrat durch das Heteroatom unterbrochen ist. Beispielsweise kann die Gruppe $R_1$ Ethereinheiten enthalten, wie $-CH_2-O-CH_2-$, Thioethereinheiten, wie $-CH_2-S-CH_2-$, oder $-CH_2-NH-CH_2-$ Einheiten. In einer anderen Variante ist/sind das/die Heteroatom(e) an die Kohlenstoff-Hauptkette oder das Kohlenstoff-Rückgrat in Form eines Substituenten angefügt, beispielsweise in Form einer Oxo-, Imino, Hydroxy, Mercapto, Halogen, Carboxyl, Carboxamid, Amino-, oder Nitrogruppe, wobei eine Hydroxygruppe am meisten bevorzugt ist. Es sind von der Erfindung auch Ausführungsformen umfasst, bei denen die Gruppe $R_1$ eine oder mehrere weitere Gruppen $-NR_2R_3$ aufweist.

In einer speziellen Ausführungsform ist die Kohlenwasserstoffgruppe von $R_1$ ausgewählt aus einer Alkylengruppe, einer Alkenylengruppe, einer Alkinylengruppe, einer Cycloalkylengruppe, einer Hetero-Cycloalkylengruppe, einer Arylengruppe, oder einer Hetero-Arylengruppe. Auch Mischungen davon sind in beliebiger Kombination umfasst, wie z.B.

- eine Kohlenwasserstoffgruppe, die aus einer oder mehr Alkylengruppen und einer oder mehr Arylengruppen zusammengesetzt ist
- eine Kohlenwasserstoffgruppe, die aus einer oder mehr Alkylengruppen und einer oder mehr Cycloalkylengruppen zusammengesetzt ist.

Ganz besonders bevorzugt ist $R_1$ eine Alkylengruppe, insbesondere eine Ethylengruppe, Propylengruppe oder Isopropylengruppe, eine Hydroxyalkylengruppe, insbesondere eine 2-Hydroxypropylengruppe ($-CH_2-CH(OH)-CH_2-$), eine Alkenylengruppe, insbesondere eine 2-Butenylengruppe ($-CH_2-CH=CH-CH_2-$). In einer weiteren bevorzugten Ausführungsform ist $R_1$ eine Iminogruppe C=NH und man erhält eine Verbindung, die Strukturen der Formel (VI) aufweist:

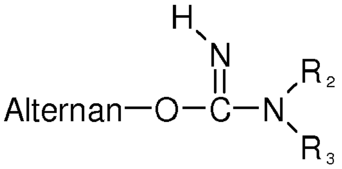

(VI)

$R_2$ und $R_3$ bezeichnen, wie erwähnt, eine Kohlenwasserstoffgruppe, wobei diese neben Kohlenstoff und Wasserstoff auch ein oder mehrere Heteroatome aufweisen kann. Bevorzugte Heteroatome sind, ohne Beschränkung, O, N, S, P, F, Cl, Br, I. Ein Heteroatom kann in die Kohlenstoffkette integriert sein, sodass die Kohlenstoffkette durch das Heteroatom unterbrochen ist. Beispielsweise kann die Gruppe $R_2$ und/oder $R_3$ Ethereinheiten enthalten, wie $-CH_2-O-CH_2-$, Thioethereinheiten, wie $-CH_2-S-CH_2-$, oder$-CH_2-NH-CH_2-$ Einheiten. In einer anderen Variante ist/sind das/die Heteroatom(e) am Kohlenstoff-Rückgrat in Form eines Substituenten angefügt, beispielsweise in Form einer Oxo-, Hydroxy, Mercapto, Halogen, Amino-, oder Nitrogruppe, wobei eine Hydroxygruppe am meisten bevorzugt ist. Es sind von der Erfindung auch Ausführungsformen umfasst, bei denen die Gruppe $R_2$ und/oder $R_3$ eine oder mehrere weitere Gruppen $-NR_2R_3$ aufweist.

In einer speziellen Ausführungsform ist die Kohlenwasserstoffgruppe von $R_2$ und/oder $R_3$ ausgewählt aus einer Alkylgruppe, einer Alkenylgruppe, einer Alkinylgruppe, einer Cycloalkylgruppe, einer Hetero-Cycloalkylgruppe, einer Arylgruppe, oder einer Hetero-Arylgruppe. Auch Mischungen davon sind in beliebiger Kombination umfasst, wie z.B.

- eine Kohlenwasserstoffgruppe, die aus einer oder mehr Alkylgruppen und/oder Alkylengruppen und einer oder mehr Arylgruppen und/oder Arylengruppen zusammengesetzt ist
- eine Kohlenwasserstoffgruppe, die aus einer oder mehr Alkylgruppen und/oder Alkylengruppen und einer oder mehr Cycloalkylgruppen und/oder Cycloalkylengruppen zusammengesetzt ist.

Wie erwähnt, können $R_2$ und $R_3$ zusammen mit dem Stickstoff, an den sie gebunden sind, einen 4-8 gliedrigen heterocyclischen Ring bilden. Beispiele sind Pyrrolidin, Pyrrol, Piperidin, Pyridin, Hexamethylenimin, Azatropiliden, Pyrazol, Imidazol, Imidazolin, Pyrimidin. Der heterocyclische Ring kann ein oder mehr weitere Stickstoffe oder von Stickstoff verschiedene Heteroatome enthalten. Bevorzugt ist Pyridin, wobei der Stickstoff durch eine Doppelbindung an einen der $R_2$ oder $R_3$ gebunden ist. Dadurch ist in der Formel (I) eine Pyridiniumstruktur enthalten, worin der Stickstoff permanent positiv geladen ist. Der heterocyclische Ring kann mit einem oder mehreren weiteren Ringen kondensiert sein. Beispiele solches kondensierter Strukturen sind Chinolin, Indol, Benzimidazol, Isochinolin, Purin,

Ganz besonders bevorzugt sind $R_2$ und $R_3$ Methyl ($-CH_3$), Ethyl ($-CH_2CH_3$), Propyl ($-CH_2CH_2CH_3$), Isopropyl, Lauryl, Stearyl, oder Cocoalkyl, wobei $R_2$ und $R_3$ gleich oder verschieden sein können.

In einer Variante wird ein funktionalisiertes Alternan-Polysaccharid angegeben, das Strukturen der folgenden Formel (II) aufweist:

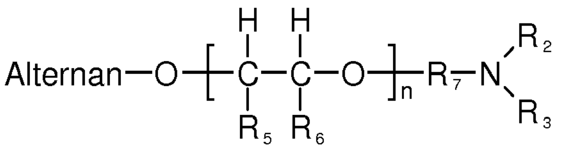

(II)

wobei $R_2$ und $R_3$ definiert sind wie in Anspruch 2 angegeben,
n eine ganze Zahl von 1 bis etwa 30, vorzugsweise 1 bis etwa 20, mehr bevorzugt 1 bis etwa 10 ist,
$R_5$ und $R_6$ ausgewählt sind aus H oder einer Kohlenwasserstoffgruppe mit 1 bis etwa 6 Kohlenstoffatomen, wobei $R_5$ und $R_6$ in den $-(CHR_5-CHR_6O)-$ Einheiten gleich oder verschieden sein können und jeder $R_5$ und $R_6$ in einer $-(CHR_5-CHR_6O)-$ Einheit unabhängig ausgewählt sein kann von jedem $R_5$ und $R_6$ in einer anderen $-(CHR_5-CHR_6-O)-$ Einheit,
$R_7$ eine Kohlenwasserstoffgruppe mit 1 bis etwa 10 Kohlenstoffatomen ist, die ein oder mehrere Heteroatome aufweisen kann,
und wobei an dem Alternan eine oder mehrere der Gruppen $-[CHR_5-CHR_6-O]_nR_7NR_2R_3$ vorhanden sein können, und in mehreren solcher Gruppen die Zahl n und die Reste $R_2$ , $R_3$ , $R_5$, $R_6$ und $R_7$ unabhängig voneinander gewählt sein können,

und wobei der Stickstoff in Formel (II) optional protoniert ist.

Der Sauerstoff zwischen "Alternan" und der Gruppe $-[CHR_5-CHR_6-O]_nR_7NR_2R_3$ ist ein Sauerstoff aus einer Hydroxygruppe des nicht-funktionalisierten Alternans. Die Gruppe $-[CHR_5-CHR_6-O]_nR_7NR_2R_3$ ist somit über einen solchen Sauerstoff mit dem Alternanrückgrat, d.h. mit dem Rückgrat des Alternan-Polysaccharids, verbunden.

$R_5$ kann im Speziellen ausgewählt sein aus Wasserstoff, einer Alkylgruppe, oder einer Phenylgruppe. Vorzugsweise ist $R_5$ $C_1$ bis $C_4$ Alkyl oder Wasserstoff, noch mehr bevorzugt eine Methylgruppe, eine Ethylgruppe oder Wasserstoff, und am meisten bevorzugt eine Methylgruppe oder Wasserstoff. Diese $R_5$ können mit jedem Wert n kombiniert werden.

$R_6$ kann im Speziellen ausgewählt sein aus Wasserstoff, einer Alkylgruppe, oder einer Phenylgruppe. Vorzugsweise ist $R_6$ $C_1$ bis $C_4$ Alkyl oder Wasserstoff, noch mehr bevorzugt eine Methylgruppe, eine Ethylgruppe oder Wasserstoff, und am meisten bevorzugt eine Methylgruppe oder Wasserstoff. Diese $R_6$ können mit jedem $R_5$ und jedem Wert n kombiniert werden.

In einer Ausführungsform, die mit jedem Wert n kombiniert werden kann, ist $R_5$ Wasserstoff und $R_6$ ist Wasserstoff, Methyl- oder Ethyl, am meisten bevorzugt Wasserstoff oder Methyl.

In einer Ausführungsform, die mit jedem Wert n kombiniert werden kann, ist $R_6$ Wasserstoff und $R_5$ ist Methyl- oder Ethyl, am meisten bevorzugt Methyl.

$R_7$ ist mit Ausnahme der maximalen Anzahl Kohlenstoffatome im Allgemeinen und im Speziellen so definiert wie $R_1$. Ganz besonders bevorzugt ist $R_7$ eine Alkylengruppe, insbesondere eine Ethylengruppe, Propylengruppe oder Isopropylengruppe, eine Hydroxyalkylengruppe, insbesondere eine 2-Hydroxypropylengruppe ($-CH_2-CH(OH)-CH_2-$), eine Alkenylengruppe, insbesondere eine 2-Butenylengruppe ($-CH_2-CH=CH-CH_2-$). In einer weiteren bevorzugten Ausführungsform ist $R_7$ eine Iminogruppe C=NH-.

In noch einer Ausführungsform wird ein funktionalisiertes Alternan-Polysaccharid angegeben, das Strukturen der folgenden Formel (III) aufweist:

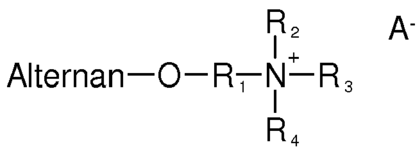

(III)

wobei

> $R_1$ eine Kohlenwasserstoffgruppe mit 1 bis etwa 100 Kohlenstoffatomen ist, die ein oder mehrere Heteroatome aufweisen kann,
> $R_2$, $R_3$ und $R_4$ jeweils eine Kohlenwasserstoffgruppe mit 1 bis etwa 20 Kohlenstoffatomen, die ein oder mehrere Heteroatome aufweisen kann, sind, wobei $R_2$, $R_3$ und $R_4$ gleich oder unterschiedlich sein können,
> wobei an dem Alternan eine oder mehrere der Gruppen
> $-R_1N^+R_2R_3R_4$ vorhanden sein können, und in mehreren solcher Gruppen die Reste $R_1$, $R_2$ , $R_3$ und $R_4$ unabhängig voneinander gewählt sein können,
> und $A^-$ ein Anion ist.

vorzugsweise ein Halogenidanion, am meisten bevorzugt Chlorid, Bromid oder Iodid.

In dieser Ausführungsform ist die Gruppe $-R_1N^+R_2R_3R_4$ eine quartäre Ammoniumgruppe.

Der Sauerstoff zwischen "Alternan" und der Gruppe $-R_1N^+R_2R_3R_4$ ist ein Sauerstoff aus einer Hydroxygruppe des nicht-funktionalisierten Alternans. Die Gruppe $-R_1N^+R_2R_3R_4$ ist somit über einen solchen Sauerstoff mit dem Alternanrückgrat, d.h. mit dem Rückgrat des Alternan-Polysaccharids, verbunden.

Die Gruppen $R_1$, $R_2$ und $R_3$ wurden im Speziellen bereits oben erläutert und diese Offenbarung hat auch für die Formel (III) Gültigkeit, mit der Ausnahme, dass $R_2$ und $R_3$ mit Bezug auf Formel (III) kein Wasserstoff sind.

$R_4$ bezeichnet eine Kohlenwasserstoffgruppe, wobei diese neben Kohlenstoff und Wasserstoff auch ein oder mehrere Heteroatome aufweisen kann. Bevorzugte Heteroatome sind, ohne Beschränkung, O, N, S, P, F, Cl, Br, I. Ein Heteroatom kann in die Kohlenstoffkette integriert sein, sodass die Kohlenstoffkette durch das Heteroatom unterbrochen ist. Beispielsweise kann die Gruppe $R_4$ Ethereinheiten enthalten, wie $-CH_2-O-CH_2-$, Thioethereinheiten, wie $-CH_2-S-CH_2-$, oder $-CH_2-NH-CH_2-$ Einheiten. In einer anderen Variante ist/sind das/die Heteroatom(e) am Kohlenstoff-Rückgrat in Form eines Substituenten angefügt, beispielsweise in Form einer Oxo-, Hydroxy, Mercapto, Halogen, Amino-, oder Nitrogruppe, wobei eine Hydroxygruppe am meisten bevorzugt ist.

Es sind von der Erfindung auch Ausführungsformen umfasst, bei denen die Gruppe $R_2$, $R_3$ und/oder $R_4$ eine oder mehrere weitere quartäre Ammoniumgruppen, zusätzlich zu der in Formel (III) bezeichneten quartären Ammoniumgruppe, aufweist.

In einer speziellen Ausführungsform ist die Kohlenwasserstoffgruppe von $R_4$ ausgewählt aus einer Alkylgruppe, einer Alkenylgruppe, einer Alkinylgruppe, einer Cycloalkylgruppe, einer Hetero-Cycloalkylgruppe, einer Arylgruppe, oder einer Hetero-Arylgruppe. Auch Mischungen davon sind in beliebiger Kombination umfasst, wie z.B.

- eine Kohlenwasserstoffgruppe, die aus einer oder mehr Alkylgruppen und/oder Alkylengruppen und einer oder mehr Arylgruppen und/oder Arylengruppen zusammengesetzt ist
- eine Kohlenwasserstoffgruppe, die aus einer oder mehr Alkylgruppen und/oder Alkylengruppen und einer oder mehr Cycloalkylgruppen und/oder Cycloalkylengruppen zusammengesetzt ist.

Ganz besonders bevorzugt sind $R_2$, $R_3$ und $R_4$ Methyl ($-CH_3$), Ethyl ($-CH_2CH_3$), Propyl ($-CH_2CH_2CH_3$), Lauryl, Stearyl, oder Cocoalkyl, wobei $R_2$, $R_3$ und $R_4$ gleich oder verschieden sein können. In einer Variante ist einer von $R_2$, $R_3$ oder $R_4$ Lauryl, Stearyl, oder Cocoalkyl und die beiden verbleibenden ausgewählt aus Methyl, Ethyl, oder Propyl, vorzugsweise Methyl.

In einer weiteren speziellen Variante wird ein funktionalisiertes Alternan-Polysaccharid angegeben, das Strukturen der Formel (IV) aufweist:

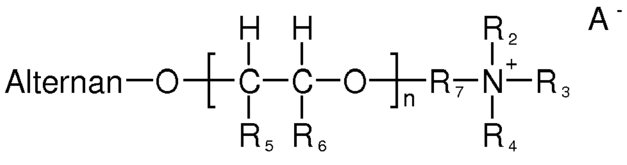

(IV)

wobei

n eine ganze Zahl von 1 bis etwa 30, vorzugsweise 1 bis etwa 20, mehr bevorzugt 1 bis etwa 10 ist,
$R_2$, $R_3$ und $R_4$ definiert sind oben bei Formel (III) angegeben,
$R_5$ und $R_6$ ausgewählt sind aus H oder einer Kohlenwasserstoffgruppe mit 1 bis etwa 6 Kohlenstoffatomen, wobei $R_5$ und $R_6$ in den $-(CHR_5-CHR_6O)-$ Einheiten gleich oder verschieden sein können und jeder $R_5$ und $R_6$ in einer $-(CHR_5-CHR_6O)-$ Einheit unabhängig ausgewählt sein kann von jedem $R_5$ und $R_6$ in einer anderen $-(CHR_5-CHR_6-O)-$ Einheit,
$R_7$ eine Kohlenwasserstoffgruppe mit 1 bis etwa 10 Kohlenstoffatomen ist, die ein oder mehrere Heteroatome aufweisen kann,
und wobei an dem Alternan eine oder mehrere der Gruppen $-[CHR_5-CHR_6-O]_nR_7N^+R_2R_3R_4$ vorhanden sein können, und in mehreren solcher Gruppen die Zahl n und die Reste $R_2$ , $R_3$ , $R_4$, $R_5$, $R_6$ und $R_7$ unabhängig voneinander gewählt sein können,
und $A^-$ ein Anion ist.

Der Sauerstoff zwischen "Alternan" und der Gruppe $-[CHR_5-CHR_6-O]_nR_7N^+R_2R_3R_4$ ist ein Sauerstoff aus einer Hydroxygruppe des nicht-funktionalisierten Alternans. Die Gruppe $-[CHR_5-CHR_6-O]_nR_7N^+R_2R_3R_4$ ist somit über einen solchen Sauerstoff mit dem Alternanrückgrat, d.h. mit dem Rückgrat des Alternan-Polysaccharids, verbunden.

$R_7$ ist mit Ausnahme der maximalen Anzahl Kohlenstoffatome im Allgemeinen und im Speziellen so definiert wie $R_1$. Ganz besonders bevorzugt ist $R_7$ eine Alkylengruppe, insbesondere eine Ethylengruppe, Propylengruppe oder Isopropylengruppe, eine Hydroxyalkylengruppe, insbesondere eine 2-Hydroxypropylengruppe ($-CH_2-CH(OH)-CH_2-$), eine Alkenylengruppe, insbesondere eine 2-Butenylengruppe ($-CH_2-CH=CH-CH_2-$). In einer weiteren bevorzugten Ausführungsform ist $R_7$ eine Iminogruppe C=NH-.

In einer Ausführungsform betrifft die Erfindung auch ein funktionalisiertes Alternan-Polysaccharid, das funktionalisiert ist wie oben angegeben und das außerdem eine oder mehrere der Gruppen der Formel (V) aufweist

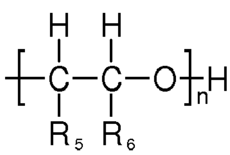

(V)

wobei die Gruppe der Formel (V) über eine Etherbrücke mit dem Alternanpolysaccharid verbunden ist,

n eine ganze Zahl von 1 bis etwa 30, vorzugsweise 1 bis etwa 20, mehr bevorzugt 1 bis etwa 10 ist,
$R_5$ und $R_6$ betreffend allgemeine und spezielle Ausführungsformen definiert sind wie oben bereits angegeben.

Die Verbindung über eine Etherbrücke bedeutet, dass die Gruppe der Formel (V) an einen Sauerstoff eines Alternans angebunden wird. Der Sauerstoff entstammt einer Hydroxygruppe des Alternan-Ausgangsstoffes. Die Gruppe der Formel (V) ist somit über einen solchen Sauerstoff mit dem Alternanrückgrat, d.h. mit dem Rückgrat des Alternan-Polysaccharids, verbunden. Die Verbindung der Gruppe der Formel (V) zu "Alternan" ist somit analog wie bei der Struktur der Formel (II) oder (IV).

In einer weiteren Ausführungsform der Erfindung wird ein funktionalisiertes Alternan-Polysaccharid angegeben,

bei dem die durchschnittliche Anzahl mit einer Stickstoffgruppe funktionalisierter Hydroxylgruppen des Alternans pro Anhydroglucoseeinheit 0,01 bis 3 beträgt, bevorzugt 0,01 bis 2, noch mehr bevorzugt 0,01 bis 1, oder 0,01 bis 0,5, am meisten bevorzugt 0,01 bis 0,1.

In einer weiteren Ausführungsform beträgt die durchschnittliche Anzahl mit einer Stickstoffgruppe funktionalisierter Hydroxylgruppen des Alternans pro Anhydroglucoseeinheit 0,02 bis 3, bevorzugt 0,02 bis 2, mehr bevorzugt 0,02 bis 1, oder 0,02 bis 0,5, noch mehr bevorzugt 0,02 bis 0,3 oder 0,02 bis 0,2, am meisten bevorzugt 0,02 bis 0,1. Solche Werte werden erhalten, wenn das nachfolgend noch beschriebene Herstellungsverfahren bei erhöhter Temperatur durchgeführt wird.

In einer weiteren Ausführungsform der Erfindung wird ein funktionalisiertes Alternan-Polysaccharid angegeben, bei dem die durchschnittliche Anzahl mit einer Stickstoffgruppe funktionalisierter Hydroxylgruppen des Alternans pro Anhydroglucoseeinheit >0,1 bis 3 beträgt, bevorzugt >0,1 bis 2, noch mehr bevorzugt >0,1 bis 1. Andere erreichbare DS-Bereiche sind 0,15 bis 3, mehr bevorzugt 0,15 bis 2, oder 0,15 bis 1. Weitere erreichbare DS-Bereiche sind 0,2 bis 3, mehr bevorzugt 0,2 bis 2, oder 0,2 bis 1. Die in diesem Absatz angegebenen DS Werte können vorteilhaft dadurch erreicht werden, dass man das Herstellungsverfahren für das funktionalisierte Alternan-Polysaccharid in einem alkoholischen Medium durchführt, wie später anhand einer speziellen Verfahrensvariante beschrieben.

In noch einer Ausführungsform beträgt die durchschnittliche Anzahl funktionalisierter Hydroxylgruppen des Alternans pro Anhydroglucoseeinheit >0,5 bis 3, vorzugsweise 0,55 bis 3, noch mehr bevorzugt >0,6 bis 3, am meisten bevorzugt 0,65 bis 3.

Die Art der Stickstoffgruppen-Funktionalisierung an Hydroxylgruppen des noch nicht funktionalisierten Alternans ist beispielsweise anhand der Formeln (I) bis (IV) beschrieben, bei welcher der Sauerstoff an "Alternan" ein Sauerstoff aus einer Hydroxygruppe des noch nicht funktionalisierten Alternans (Alternan-Ausgangssubstanz) ist. Bei der Funktionalisierung wird eine Hydroxygruppe in eine Ethergruppe -O- überführt und eine Stickstoffgruppe über eine weitere Gruppe, wie beispielsweise anhand der Formeln (I) bis (IV) beschrieben, angebunden. Dies wird als "funktionalisierte Hydroxylgruppe" bezeichnet. Die Formeln (I) bis (IV) sind beispielhaft und andere Möglichkeiten der Anbindung denkbar.

Die durchschnittliche Anzahl mit einer Stickstoffgruppe funktionalisierter Hydroxylgruppen des Alternans pro Anhydroglucoseeinheit wird auch als "Substitutionsgrad" bezeichnet und mit "DS" (Degree of Substitution) abgekürzt. Pro Anhydroglucoseeinheit stehen maximal drei freie Hydroxylgruppen zur Verfügung, sodass der DS maximal 3 betragen kann, wenn alle drei Hydroxylgruppen substituiert wurden und entlang der Kette keine Unterschiede zwischen den Monomeren bestehen.

Alle oben genannten DS-Bereiche sind in beliebiger Kombination mit allen zuvor genannten Molmassenbereichen und DP-Bereichen des funktionalisierten Alternans kombinierbar.

In einer Ausführungsform ist das funktionalisierte Alternan vernetzt. Die Vernetzung kann eine reversible oder eine irreversible Vernetzung sein, beispielsweise eine physikalische oder chemische Vernetzung, vorzugsweise eine chemische Vernetzung. Eine Reihe von Agenzien und Verfahren, sind für die reversible und/oder irreversible Vernetzung von Hydroxylgruppen des Alternans geeignet. Vernetzungsmittel werden weiter unten anhand des Herstellungsverfahrens eines funktionalisierten, vernetzten Alternans erläutert.

In einer Ausführungsform weist das funktionalisierte Alternan-Polysaccharid weiterhin auch anionische Gruppen als funktionelle Gruppen auf. In dieser Ausführungsform betrifft die Erfindung ein amphoteres Alternan-Polysaccharid, das sowohl die beschriebenen kationischen oder kationisierbaren Stickstoffgruppen aufweist als auch eine anionische Gruppe. Bevorzugte anionische Gruppen sind Carboxyl-Gruppen.

Vorzugsweise ist das funktionalisierte Alternan wasserlöslich. Der Begriff "wasserlöslich" bedeutet insbesondere eine Wasserlöslichkeit bis zu 5 Gew.-% oder mehr, vorzugsweise bis zu 7 Gew.-% oder mehr. Es wurde überraschenderweise gefunden, dass bei den erzielten und oben beschriebenen Substitutionsgraden das Produkt in Abhängigkeit von DS-Wert und Konzentration viskositätsstabile wässrige Lösungen oder Gele bildet. Diese Eigenschaft ist überraschend, da in WO0047628 eine Unlöslichkeit für derivatiserte Polysaccharide mit solchen Substitutionsgraden beschrieben wird. Bei relativ hohen DS-Werten können Hydrogele erzeugt werden, die die anwendbare Konzentration für eine noch fließfähige Lösung einschränken.

Ebenfalls ist das erhaltene funktionalisierte Alternan vorzugsweise nicht mikrostrukturiert. Insbesondere ist das funktionalisierte Alternan nicht mikrofibrillär, d.h. es weist keine Mikrofibrillen auf. Unter dem Begriff "mikrofibrillär" sind Strukturen zu verstehen, die in WO0047628 anhand von Cellulose und derivatisierter Cellulose beschrieben sind. In WO0047628, S. 11, Z. 5-15, werden Mikrofibrillen als Substrukturen mit kleinem Durchmesser und hohem Länge-zu-Durchmesser-Verhältnis definiert, die in ihren Dimensionen mit natürlichen Cellulose-Mikrofibrillen vergleichbar sind. Beispielhaft sind dort Mikrofibrillen mit einem Durchmesser von etwa 20 bis etwa 100 nm genannt, und einem hohen Länge-zu-Durchmesser-Verhältnis, wie mehr als 100, 500 oder 1000. Natürliche Cellulose-Mikrofibrillen werden in WO0047628 als Bündel beschrieben, die parallel innerhalb einer Matrix amorpher Strukturen verlaufen (WO0047628, S. 10, Z. 25 - S. 11, Z. 4, worauf hier ausdrücklich Bezug genommen wird).

Es ist mit bisher bekannten Spinntechniken für Cellulose, wie in WO0047628, S. 11 beschrieben, auch nicht

möglich, das funktionalisierte Alternan der vorliegenden Erfindung in einen mikrofibrillären oder faserförmigen Zustand zu bringen. Versuche haben gezeigt, dass das gelöste funktionalisierte Alternan beim Austritt aus einer Spinndüse in einem Fällbad nicht zu Filamenten koaguliert.

In einer weiteren Ausführungsform weist das funktionalisierte Alternan keine cyclischen Alternanmoleküle auf, sondern nur nicht-cyclische Alternanmoleküle, d.h. in sich nicht geschlossene Ketten.

In noch einer weiteren Ausführungsform weist das funktionalisierte Alternan überwiegend nicht-cyclische Alternanmoleküle auf

In einem weiteren Aspekt betrifft die Erfindung ein Verfahren zur Funktionalisierung von Alternan mit protonierbaren Stickstoffgruppen oder permanent positiv geladenen Stickstoffgruppen, wobei Alternan in einem flüssigen Reaktionsmedium mit einem Funktionalisierungsmittel, das eine solche Stickstoffgruppe aufweist, unter Zusatz einer alkalischen Komponente, die als Katalysator wirkt, umgesetzt wird.

Vorzugsweise wird das Verfahren bei einer Temperatur von 40 - 90°C durchgeführt, vorzugsweise 40 - 80°C. Dadurch erzielt man den zusätzlichen Vorteil, dass relativ hohe Substitutionsgrade (DS) erhalten werden, beispielsweise 0,02 bis 3.

Mit dem Begriff "Alternan" ist in diesem Zusammenhang ein noch nicht funktionalisiertes Alternan, also der Alternan-Ausgangsstoff gemeint. Vorzugsweise wird bei dem noch nicht funktionalisierten Alternan die Molmasse so gewählt, dass ein funktionalisiertes Alternan mit einer mittleren Molmasse Mw erhalten wird wie bereits zuvor bei der Beschreibung des funktionalisierten Alternans angegeben.

Unter einer alkalischen Komponente, als Katalysator, ist erfindungsgemäß eine Substanz zu verstehen, die Hydroxidionen (OH-) enthält oder nach Zusatz zu dem Reaktionsgemisch Hydroxidionen bildet. Dazu gehören Laugen, Carbonate und Oxide der Erdalkalien. Der Katalysator kann flüssig, fest oder gasförmig sein. Bevorzugt wird eine flüssige alkalische Komponente eingesetzt.

In einer Ausführungsform ist die alkalische Komponente eine wässrige Lösung oder Suspension eines Alkali- oder Erdalkalihydroxides oder eine wässrige Lösung oder Suspension eines Erdalkalioxides. Das Hydroxid ist vorzugsweise ausgewählt aus Lithiumhydroxid, Natriumhydroxid, Kaliumhydroxid, Bariumhydroxid und Calciumhydroxid, wobei vorzugsweise die alkalische Komponente wässriges Natriumhydroxid oder wässriges Kaliumhydroxid oder wässriges CaO ist.

Das Verfahren kann in folgenden Schritten durchgeführt werden:

a) Lösen oder suspendieren von Alternan,
b) Hinzugabe der alkalischen Komponente, vorzugsweise unter Rühren, und vorzugsweise in Form von wäßriger Lauge,
c) Zugabe des Funktionalisierungsmittels, vorzugsweise unter Rühren.

Anschließend können die folgenden Schritte durchgeführt werden:

- Beendigung der Synthese durch Abkühlung
- Separation des Alternans

Weiterhin können die folgenden Aufarbeitungs- und Reinigungsschritte durchgeführt werden:

- Suspendierung des Alternanproduktes, vorzugsweise in Alkohol/Wasser-Gemisch, beispielsweise in MeOH/Wasser (zum Beispiel 8:2; v/v)
- Einstellung eines neutralen oder annähern neutralen pH-Wertes, beispielsweise mit Eisessig
- Waschen des Produktes, beispielsweise in Alkohol/Wasser-Gemisch und/oder Alkohol, insbesondere mit MeOH/ Wasser (8:2; v/v) und nachfolgend mit Methanol
- Trocknung, beispielsweise Vakuumtrocknung

Ob in Schritt a) eine Lösung oder Suspension erhalten wird, hängt von der Konzentration des nicht-funktionalisierten Alternans, von der Löslichkeit des nicht-funktionalisierten Alternans, die unter anderem durch seine Molmasse bedingt ist, ab. Vorzugsweise wird eine gequollene Suspension hergestellt.

Das Verfahren wird vorzugsweise bei Normaldruck, d.h. Umgebungsdruck, durchgeführt.

Die Gerätschaft zur Durchführung des Verfahrens ist nicht auf eine spezielle beschränkt. Generell können Reaktoren eingesetzt werden, welche auch bei der Herstellung von Carboxymethylcellulose verwendet werden. Beispielhaft zu nennen sind Rührkessel, Rohrreaktoren und Kneter.

Nachfolgend sind Synthesewege beschrieben, wie verschiedene, beispielhaft ausgewählte funktionalisierte Alternane erhalten werden können.

Zum Erhalt von Verbindungen der Formel (I) kann nicht-funktionalisiertes Alternan einem Funktionalisierungsmittel umgesetzt werden, das die folgende Formel (VII) aufweist.

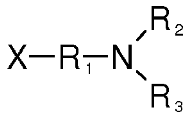

(VII)

wobei $R_1$, $R_2$ und $R_3$ die gleiche Bedeutung haben wie oben beschrieben und X ein Halogenatom, insbesondere Chlor-, Brom- oder Jod ist.

Besonders bevorzugte Funktionalisierungsmittel dieses Typs sind, ohne Beschränkung, Dialkylaminoalkyl-Halogenide, wie beispielsweise 2-Diethylaminoethylchlorid, 2-Diisopropylaminoethylchlorid, 2-Diethylaminoethylbromid, und 2-Dimethylaminoisopropylchlorid.

Zum Erhalt von Verbindungen der Formel (I) kann nicht-funktionalisiertes Alternan in einer weiteren Variante einem Funktionalisierungsmittel umgesetzt werden, das die folgende Formel (VIII) aufweist.

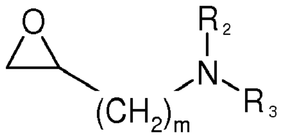

(VIII)

wobei $R_2$ und $R_3$ die gleiche Bedeutung haben wie oben beschrieben und m eine ganze Zahl von 1 bis 10 ist, vorzugsweise 1. Ein besonders bevorzugtes Funktionalisierungsmittel dieses Typs ist 2,3-Epoxypropyldiethylamin.

Zum Erhalt von Verbindungen der Formel (I) kann nicht-funktionalisiertes Alternan in noch weiteren Varianten mit Ethylenimin (Aziridin), Cyanamid oder Dialkylcyanamid umgesetzt werden.

Zum Erhalt von Verbindungen der Formel (III) kann nicht-funktionalisiertes Alternan einem Funktionalisierungsmittel umgesetzt werden, das eine analoge Struktur und Definition wie die Funktionalisierungsmittel der obigen Formeln (VII) oder (VIII) aufweist, wobei zusätzlich am Stickstoff ein weiterer Rest $R_4$ vorhanden ist, der die gleiche Bedeutung hat, wie bereits beschrieben, sodass der Stickstoff positiv geladen ist und das Funktionalisierungsmittel eine quartäre Ammoniumgruppe aufweist. Besonders bevorzugte Funktionalisierungsmittel sind in diesem Zusammenhang Glycidyltrimethylammoniumchlorid, auch bezeichnet als 2,3-Epoxypropyltrimethylammoniumchlorid (EPTAC),
3-Chlor-2-hydroxypropyl-trimethylammoniumchlorid (CHTAC),
3-Chlor-2-hydroxypropyl-triethylammoniumchlorid,
3-Chlor-2-hydroxypropyl-alkyl-dimethylammoniumchlorid, wobei Alkyl in diesem Zusammenhang für eine Alkylgruppe mit 2 bis 20 Kohlenstoffatomen steht, vorzugsweise Dodecyl, Cocoalkyl oder Stearyl.
Solche Funktionalisierungsmittel sind beispielsweise unter den Handelsnamen "Quab 151 ", "Quab 188", "Quab 151 ", "Quab 342", "Quab 360" und "Quab 426" von der Firma Quab Chemicals erhältlich.

Verbindungen der Formel (III) können auch erhalten werden, indem zuerst eine Verbindung der Formel (I) hergestellt wird und diese Verbindung anschließend mit einem Alkylierungsmittel umgesetzt wird, wobei das Alkylierungsmittel eine Gruppe $R_4$ aufweist, die in diesem Fall eine Alkylgruppe ist, und der Stickstoff mit einer Gruppe $-R_4$ alkyliert wird. Beispiele solcher Alkylierungsmittel sind 2-Chlorethanol, Methyliodid, Ethyliodid, Methylbromid, Ethylbromid, Alkylenoxide und Dimethylsulfat.

Nachfolgend werden einige Ausführungsformen des Verfahrens beschrieben, wobei das nicht-funktionalisierte Alternan, oder das mit Stickstoffgruppen funktionalisierte Alternan, mit einer oder mehreren Epoxyverbindungen umgesetzt wird.

In einer ersten Verfahrensvariante wird nicht-funktionalisiertes Alternan zuerst mit einer oder mehreren Epoxyverbindung(en) umgesetzt, die vorzugsweise die Formel (IX) aufweist/aufweisen:

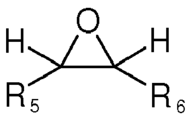

(IX)

wobei $R_5$ und $R_6$ definiert sind wie oben angegeben. Bevorzugte Verbindungen der Formel (IX) sind Ethylenoxid und Propylenoxid. Man erhält ein Alternan, das eine oder mehrere der Gruppen der Formel (V) aufweist

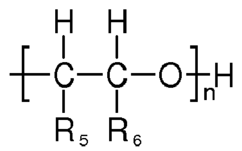

(V)

wobei n eine ganze Zahl von 1 bis 30, vorzugsweise 1 bis etwa 20, mehr bevorzugt 1 bis etwa 10 ist. Anschließend kann dieses Produkt mit einer Verbindung der Formel (X) umgesetzt werden,

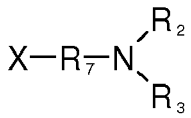

(X)

wobei $R_2$, $R_3$ und $R_7$ die Bedeutung haben wie oben bereits angegeben, und X ein Halogenatom, insbesondere Chlor-, Brom- oder Jod ist. Besonders bevorzugte Funktionalisierungsmittel dieses Typs sind, ohne Beschränkung, Dialkylaminoalkyl-Halogenide, wie beispielsweise 2-Diethylaminoethylchlorid, 2-Diisopropylaminoethylchlorid, 2-Diethylaminoethylbromid, und 2-Dimethylaminoisopropylchlorid. Als Produkt wird eine Verbindung erhalten, die Strukturen der Formel (II)

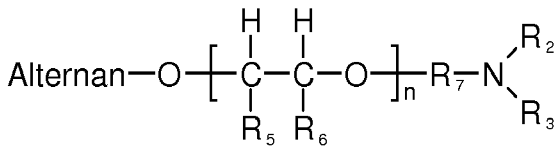

(II)

aufweist, wobei an dem Alternan eine oder mehrere der Gruppen $-[CHR_5-CHR_6-O]_nR_7NR_2R_3$ vorhanden sein können.

Das Produkt, das Gruppen der Formel (V) trägt, kann beispielsweise auch mit einem Funktionalisierungsmittel der oben angegebenen Formel (VIII) umgesetzt werden. Man erhält dann zwischen N und O eine Hydroxyalkylengruppe, vorzugsweise eine Hydroxypropylengruppe.

Die Verbindung der Formel (X) oder der Formel (VIII) kann mit endständigen OH-Gruppen reagieren, die an Gruppen der Formel (V) vorhanden sind. Diese Umsetzung muss nicht vollständig sein. Bei nicht vollständiger Umsetzung erhält man ein Stickstofffunktionalisiertes Alternan, das weiterhin Gruppen der Formel (V) aufweist. Der Umsetzungsgrad kann durch die Reagenzienmenge und Reaktionsbedingungen eingestellt werden. Außerdem kann die Verbindung der Formel (X) oder der Formel (VIII) auch mit freien OH-Gruppen reagieren, die direkt am Alternanrückgrat vorhanden sind.

In analoger Weise kann ein Alternan, das eine oder mehrere der Gruppen der Formel (V) aufweist

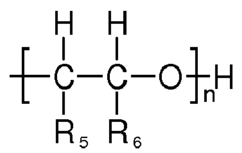

(V)

mit einem Funktionalisierungsmittel umgesetzt werden, das bereits oben bei der Herstellung von Verbindungen der Formel (III) beschrieben wurde, beispielsweise Glycidyltrimethylammoniumchlorid, auch bezeichnet als 2,3-Epoxypropyltrimethylammoniumchlorid (EPTAC),
3-Chlor-2-hydroxypropyl-trimethylammoniumchlorid (CHTAC),
3-Chlor-2-hydroxypropyl-triethylammoniumchlorid,
3-Chlor-2-hydroxypropyl-alkyl-dimethylammoniumchlorid, wobei Alkyl in diesem Zusammenhang für eine Alkylgruppe mit 2 bis 20 Kohlenstoffatomen steht, vorzugsweise Dodecyl, Cocoalkyl oder Stearyl.
Auch in diesem Fall reagiert das Funktionalisierungsmittel mit endständigen OH-Gruppen, die an Gruppen der Formel (V) vorhanden sind. Diese Umsetzung muss nicht vollständig sein. Bei nicht vollständiger Umsetzung erhält man ein mit quartären Ammoniumgruppen funktionalisiertes Alternan, das weiterhin Gruppen der Formel (V) aufweist. Der Umsetzungsgrad kann durch die Reagenzienmenge und Reaktionsbedingungen eingestellt werden. Außerdem kann auch

in diesem Fall das Funktionalisierungsmittel mit freien OH-Gruppen reagieren, die direkt am Alternanrückgrat vorhanden sind.

In einer zweiten Variante des Verfahrens wird ein bereits mit Stickstoffgruppen funktionalisiertes Alternan, das Strukturen der Formel (I)

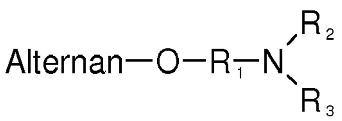

(I)

aufweist, worin $R_1$, $R_2$ und $R_3$ wie oben angegeben definiert sind,
oder das Strukturen der Formel (III)

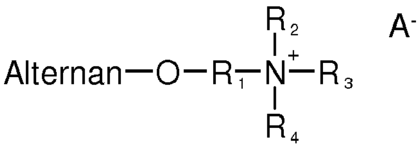

(III)

aufweist, worin $R_1$, $R_2$, $R_3$ und $R_4$ wie oben angegeben definiert sind,
mit einer Epoxyverbindung, oder mehreren verschiedenen Epoxyverbindungen, umgesetzt, die vorzugsweise die Formel (IX) aufweist/aufweisen:

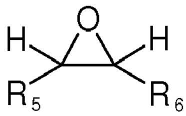

(IX)

Man erhält dann ein mit Stickstoffgruppen funktionalisiertes Alternan, das Strukturen der Formel (I) oder (III) aufweist und außerdem Gruppen der obigen Formel (V) aufweist.

Weitere Verfahrensvarianten durch unterschiedliche Reihenfolgen von Umsetzungsschritten sind möglich.

Die Molverhältnisse der in dem Verfahren eingesetzten Stoffe werden je nach dem gewünschten Ergebnis gewählt. Insbesondere wird das Molverhältnis von Alternanmonomer (Anhydroglucose) zu Stickstoffgruppen-haltigem Funktionalisierungsmittel auf den gewünschten Substitutionsgrad abgestimmt.

Beispielsweise können die folgenden Molverhältnisse eingesetzt werden:

Verhältnis von Alternanmonomer (Anhydroglucose) : Stickstoffgruppen-haltigem Funktionalisierungsmittel

von 1 : 0,01 bis 1 :5, vorzugsweise 1 : 0,1 bis 1 : 2.

Das Verhältnis von Alternanmonomer (Anhydroglucose) : Hydroxydionen der alkalischen Komponente kann gewählt werden wie aus der Herstellung von Carboxymethylcellulose bekannt. Ein beispielhafter Bereich ist 1 : 0,1 bis 1 : 2.

Das flüssige Reaktionsmedium kann ein wässriges Reaktionsmedium sein.

In einer anderen, speziellen Verfahrensvariante weist das flüssige Reaktionsmedium ausschließlich oder vorwiegend einen Alkohol auf. Mit dieser Variante werden insbesondere die folgenden Vorteile erzielt:

Es werden höhere Substitutionsgrade und Reagenzausbeuten im Vergleich zu einem System erreicht, in dem ein rein wässriges alkalisches Reaktionsmedium eingesetzt wird. So wird ein DS von >0,1, vorzugsweise >0,15 erhalten.
Es kann die Menge des eingesetzten Funktionalisierungmittels begrenzt werden. D.h. es ist zur Erzielung relativ hoher DS-Werte relativ wenig Funktionalisierungsmittel erforderlich.

Das Verhältnis von Alternanmonomer (Anhydroglucose) : Funktionalisierungsmittel beträgt in dieser Verfahrensvariante vorzugsweise 1 : 0,01 bis 1 : 4, vorzugsweise 1 : 0,1 bis 1 : 1.

Ein hoher DS ist vorteilhaft wenn das funktionalisierte Alternan zur Metallkomplexierung eingesetzt wird. So können beispielsweise DS-Werte von >0,1, vorzugsweise 0,2 oder mehr erzielt werden.

Wenn das flüssige Reaktionsmedium vorwiegend einen Alkohol aufweist, dann bedeutet dies einen Volumenanteil von >50 Vol.-%, mehr bevorzugt >60 Vol.-%, oder >70 Vol.-%, oder >80 Vol.-%, am meisten bevorzugt >90 Vol.-%. Als weitere flüssige Komponente kann beispielsweise ein Anteil Wasser vorhanden sein, insbesondere wenn wässriges Alkali als alkalische Komponente zugegeben wird, wie nachfolgend beschrieben. Insbesondere ist das Reaktionsmedium eine Alkohol-Wasser Mischung mit dem oben angegebenen Vol.-% Alkohol.

Der Alkohol ist in einer Ausführungsform ausgewählt aus Methanol, Ethanol, Propanol, Isopropanol, Butanol, Isobutanol, oder einer beliebigen Mischung davon.

In dem Verfahren kann das funktionalisierte Alternan vernetzt werden oder Alternan kann zunächst vernetzt und anschließend funktionalisiert werden, wobei ersteres bevorzugt ist. Somit enthält das Verfahren in einer Ausführungsform einen Vernetzungsschritt.

Die Vernetzung kann eine chemische Vernetzung sein, die beispielsweise mit folgenden Vernetzungsmitteln durchgeführt werden kann:

- Niedermolekulare Aldehyde, Ketone und Oxidationsmittel, wie beispielsweise Formaldehyd, Glyoxal, Brenztraubensäure, Glutaraldehyd.
- Organische, mehrbasige Säurechloride und deren Derivate, wie beispielsweise Bernsteinsäure, Glutarsäure, Citronensäure, Adipinsäure, Apfelsäure, Malonsäure, Weinsäure.
- Anorganische vernetzende Agenzien, wie beispielsweise Anorganische mehrbasige Säuren, Alkali-Hypochlorit (incl. $Cl_2$ im alkalischen Milieu), Phosgen, Phosphoroxychlorid, Polyphosphate, Akali-Trimetaphosphate, polyfunktionelle Silane
- Epoxy-Verbindungen, ihre Derivate und reaktive Oligo-und Polymere, wie beispielsweise Epichlorhydrin, Epichlorhydrinderivate, z.B. mono- und multifunktionale Glycidylether, Epoxihalide, Substituierte Epoxide, Polyepoxide, Aliphatische Dihalide, substituierte Polyethylene-glycole, wie beispielsweise Diglycoldichlorid.
- Pfropfungsagenzien, die anschließend zur Bildung von Vernetzungsstellen weiterreagiert werden können, beispielsweise durch radikalische Verküpfung oder Polymerisation von Doppelbindungen. Beispiele sind Acrylsäure-Verbindungen, substituierte Acrylate, Vinylgruppen-haltige Verbindungen, Aldehyd-Amid-Kondensate.

In einer weiteren Variante werden Vernetzungen physikalisch erzeugt, beispielsweise durch:

- Thermische Prozesse (wasserfrei), einschließlich Schmelzen
- Hydrothermische Prozesse (Hitze-Feuchtigkeitsbehandlung)
- Compoundierungen
- Gefrier/Tau-Prozesse

In das mit Stickstoffgruppen funktionalisierte, vernetzte oder unvernetzte Alternan können in einem weiteren Verfahrensschritt anionische Gruppen als funktionelle Gruppen eingefügt werden, sodass ein amphoteres funktionalisiertes Alternan erhalten wird. Bevorzugte anionische Gruppen sind Phosphat-, Phosphonat-, Sulfat-, Sulfonat- oder Carboxyl-Gruppen. Das Molverhältnis von anionischen Gruppen zu Stickstoffgruppen kann 1:1 oder etwa 1:1 sein, oder davon unterschiedlich sein. Reagenzien zur Einführung solcher Gruppen sind bekannt, beispielsweise aus der Modifizierung von Stärke mit anionischen Gruppen. Beispielhaft genannt ist Chloressigsäure zur Einführung von Carboxylgruppen.

In einem weiteren Aspekt betrifft die vorliegende Erfindung eine Zusammensetzung, insbesondere kosmetische Zusammensetzung, pharmazeutische Zusammensetzung, Wundschutzmittel, Ultraschallgel, Beschichtungsmittel, Reinigungs- oder Waschmitteladditiv, Schlichtungsmittel für Textilfasern, Symplexbildner, Bindemittel, Mittel zur Papierherstellung oder Papierbehandlung, Mittel zur Wasserbehandlung, Bohrflüssigkeit, Nahrungsmittel, Nahrungsmittelzusatzstoff, Adsorbenz, Biozid, Verkapselungsmittel, agrartechnische Zusammensetzung, Komplexierungsmittel, Emulgator, Tensid, Viskositätsregulator, Bindemittel, Leimungsmittel, Schutzkolloid, Dispersionsmittel, Ionenaustauscher, Wasserenthärter, Flockungsmittel, Trocknungshilfsmittel, Antikondensationshilfsmittel Bohrhilfsmittel, umfassend ein funktionalisiertes Alternan-Polysaccharid zuvor beschrieben. Ebenfalls betrifft die Erfindung die Verwendung des funktionalisierten Alternan-Polysaccharids in einer solchen Zusammensetzung oder zur Herstellung einer solchen Zusammensetzung. Auch umfasst ist die Verwendung des funktionalisierten Alternan-Polysaccharids als Hauptkomponente oder alleinige Substanz in oben genannten Anwendungen.

Der Begriff Trocknungshilfsmittel und Antikondensationshilfsmittel bedeutet, dass das funktionalisierte Alternan-Polysaccharid einem Trocknungsmittel oder Antikondensationsmittel als zusätzliche Komponente zugegeben wird. In dieser Mischung wirkt das funktionalisierte Alternan-Polysaccharid unter anderem als Viskositätsregulator, beispielsweise zur Verdickung eines Trocknungsmittels, das Wasser aufgenommen hat.

Vorzugsweise handelt es sich bei den erfindungsgemäßen Nahrungsmitteln, die in dieser Beschreibung auch als "Lebensmittel" bezeichnet werden, um Zusammensetzungen enthaltend ein erfindungsgemäßes funktionalisiertes

Alternan-Polysaccharid und (mindestens) einen Stoff der vom Menschen zum Zwecke der Ernährung aufgenommen wird. Zu den Stoffen, die vom Menschen zum Zwecke der Ernährung aufgenommen werden zählen u.a. Ballaststoffe, Mineralstoffe, Wasser, Kohlenhydrate, Proteine, Fette, Vitamine, sekundäre Pflanzenstoffe, Spurenelemente, Aromastoffe, Geschmacksstoffe und/oder Lebensmittelzusatzstoffe.

Bei den erfindungsgemäßen kosmetischen Zusammensetzungen handelt es sich vorzugsweise um Zusammensetzungen enthaltend ein erfindungsgemäßes funktionalisiertes Alternan-Polysaccharid und einen oder mehrere unter der INCI-Nomenklatur (INCI: International Nomenclature Cosmetic Ingredients) aufgeführten Inhaltsstoffe. Unter die INCI Nomenklatur fallende Inhaltsstoffe sind u.a. veröffentlicht in "International Cosmetic Ingredient Dictionary and Handbook, 11th Edition, January 2006, Publisher: CTFA, ISBN: 1882621360. Besonders bevorzugt handelt es sich bei den kosmetischen Zusammensetzungen um Dickungsmittel für Produkte wie Cremes, Gele, Seifen und Pasten, Flüssigreinigungs- und Pflegemittel, Stabilisator für Schäume, Absorbenz in Hygieneprodukten

Bei den erfindungsgemäßen pharmazeutischen Zusammensetzungen handelt es sich vorzugsweise um Zusammensetzungen enthaltend ein erfindungsgemäßes funktionalisiertes Alternan und (mindestens) eine pharmakologisch wirksame Substanz in Flüssigkeiten, Gelen, Pasten, Filmen, Tabletten, Retardabgabesystemen.

Eine spezielle Anwendung des funktionalisierten Alternans in einer pharmazeutischen Zusammensetzung ist die Verwendung als Verkapselungsmittel für einen oder mehrere therapeutische Wirkstoffe.

In einer pharmazeutischen Zusammensetzung kann das funktionalisierte Alternan auch als therapeutischer Wirkstoff vorhanden sein.

Im Sinne eines Verkapselungsmittels kann das funktionalisierte Alternan generell zur Verkapselung anderer Substanzen oder lebender Materie, insbesondere lebender Zellen, eingesetzt werden.

Die erfindungsgemäßen funktionalisierten Alternane können durch die Vermittlung von Viskosität und der Ausbildung von Gelen bei relativ geringer Konzentration besonders für die Verwendung in Lebensmitteln/Lebensmittelzusammensetzungen geeignet sein, bei denen eine gewisse Dickungsleistung von Relevanz ist. Sie können daher als Viskositätsregulator oder Geliermittel bei der Herstellung und Zubereitung eingesetzt werden (z.B. in Milchprodukten, Backwaren, Getränken, Desserts, Konfitüren, Saucen, Puddings, Wurstwaren, Süßwaren, Halb- und Fertiggerichten etc.) Da die erfindungsgemäßen funktionalisierten Alternane keine oder nur eine geringe Trübung aufweisen, sind sie daher besonders für die Verwendung in Lebensmitten geeignet, die ein klares Erscheinungsbild aufweisen sollen oder müssen. Der stabilisierende Effekt bzw. die emulgierende Aktivität, die die erfindungsgemäßen funktionalisierten Alternane haben, macht sie besonders geeignet für die Verwendung in Lebensmitten, die sowohl lipophile (z.B. Fette), als auch hydrophile Bestandteile aufweisen.

Betreffend kosmetische oder pharmazeutische Zusammensetzungen sind ebenfalls die Viskosität vermittelnden Eigenschaften von erfindungsgemäßen funktionalisierten Alternan-Polysacchariden, sowie deren Emulsion stabilisierende bzw. emulgierende Eigenschaften von besonderer Bedeutung. Sie können daher z.B. Bestandteile von Tinkturen, Cremes, Lotionen, Salben, Sonnenschutzmitteln, Schminkmitteln, Zahnputzmitteln, Körper- und Haarpflegemitteln etc. darstellen. Da die erfindungsgemäßen funktionalisierten Alternan-Polysaccharide verschiedene Gele bilden können, sind sie auch besonders für die Herstellung von Hydrogelen geeignet. Betreffend pharmazeutische Zusammensetzungen können die erfindungsgemäßen funktionalisierten Alternan-Polysaccharide als Sprengmittel, z.B. in Tabletten verwendet werden.

In noch einem weiteren Aspekt betrifft die Erfindung auch die Verwendung eines funktionalisierten Alternans wie zuvor beschrieben in einer kosmetischen Zusammensetzung, einer pharmazeutischen Zusammensetzung, einem Wundschutzmittel, einem Ultraschallgel, einem Beschichtungsmittel, einem Reinigungs- oder Waschmitteladditiv, einem Bindemittel, einem Mittel zur Papierherstellung oder Papierbehandlung, einem Mittel zur Wasserbehandlung, einer Bohrflüssigkeit, einem Nahrungsmittel, einem Nahrungsmittelzusatzstoff, einem Biozid, einem Verkapselungsmittel einer agrartechnischen Zusammensetzung, einem Komplexierungsmittel, Emulgator, Tensid, Viskositätsregulator, Bindemittel, Leimungsmittel, Schutzkolloid, Dispersionsmittel, Ionenaustauscher, Wasserenthärter, Flockungsmittel, Trocknungshilfsmittel, Antikondensationshilfsmittel, Schlichtungsmittel für Textilfasern, einem Simplexbildner oder Bohrhilfsmittel.

In diesen Verwendungen kann das funktionalisierte Alternan allein verwendet werden oder Mischung mit anderen Bestandteilen. Beispielsweise kann das funktionalisierte Alternan selbst als Wundschutzmittel, Nahrungsmittelzusatzstoff, Beschichtungsmittel, Bindemittel, Mittel zur Papierherstellung oder Papierbehandlung, Mittel zur Wasserbehandlung, Biozid, Verkapselungsmittel, Komplexierungsmittel, Emulgator, Tensid, Viskositätsregulator, Bindemittel, Leimungsmittel, Schutzkolloid, Dispersionsmittel, Ionenaustauscher, Wasserenthärter, Flockungsmittel, Trocknungshilfsmittel, Antikondensationshilfsmittel, Schlichtungsmittel für Textilfasern, Simplexbildner oder Bohrhilfsmittel verwendet werden.

Nachfolgend wird die Erfindung anhand von Beispielen beschrieben.

**A) Figurenbeschreibung**

Fig. 1 zeigt Molmassenverteilungen von Alternan-Polysaccharid, das mit quartären Ammoniumgruppen funktionalisiert ist und verschiedene DS Werte aufweist, im Vergleich zum entsprechenden nicht funktionalisierten Alternan-Ausgangsstoff.

Fig. 2 zeigt das Fließverhalten von Alternan-Polysaccharid, das mit quartären Ammoniumgruppen funktionalisiert ist, im Vergleich zum entsprechenden nicht funktionalisierten Alternan-Ausgangsstoff in wässriger Lösung.

Fig. 3 zeigt einen Frequenzsweep bei dynamischer Rheologie von Alternan-Polysaccharid, das mit quartären Ammoniumgruppen funktionalisiert ist, in wässriger Lösung im Vergleich zu nicht funktionalisiertem Alternan, zur Bestimmung des Lösungszustandes.

Fig. 4 zeigt Chromatogramme vor Adsorption und nach Berechnung der adsorbierten Menge von kationischem Alternan an einen Papierfaserstoff.

**B) Allgemeine Methoden**

**1. Herstellung von Alternan**

Alternan kann mit Hilfe des Enzyms Alternansucrase hergestellt werden. Das Enzym Alternansucrase kann auf verschiedene Weise mit dem Fachmann bekannten Verfahren hergestellt werden.
Die Herstellung von Alternansucrase und Alternan mit Hilfe von Bakterienstämmen der Spezies Leuconostoc *mesenteroides* sind u.a. in Reamakers et al (1997, J. Chem. Tech. Biotechnol. 69, 470-478) oder in WO 2006 088884 (siehe insbesondere Beispiel 1) beschrieben.
Verfahren, die *Leuconostoc mesenteroides* Bakterienstämme zur Herstellung des Enzyms Alternansucrase verwenden, weisen jedoch den Nachteil auf, dass diese Stämme auch andere Sucarsen, insbesondere Dextransucrasen produzieren. Diese anderen Sucrasen können bisher nicht vollständig von Alternansucrase getrennt werden. Es handelt sich daher um eine Mischung unterschiedlicher Enzyme. Das mit einer solchen Enzymmischung hergestellte Alternan weist daher neben Alternan auch zumindest in geringen Mengen Dextran auf. Zur Herstellung reinen Alternans sind daher Methoden zur Herstellung von Alternansucrase mittels rekombinanter Organismen zu bevorzugen. Verfahren zur Herstellung von mittels rekombinanter Organismen hergestellter Alternansucrase und zur Herstellung von Alternan mittels des auf diese Weise hergestellten Enzyms sind u.a. beschrieben in WO 2000 47727, US 2003 229923 (siehe insbesondere Beispiele 2, 5 und 8) oder Joucla et al (2006, FEBS Letters 580, 763-768).

**2. Funktionalisierung mit quartären Ammoniumgruppen**

**2.1 Vorschrift 1**

Chemikalien:

- 4M NaOH
- 2,3-Epoxypropyltrimethylammoniumchlorid (Quab® 151) als wässrige Lösung mit einem Gehalt an Quab® 151 von 90%
- 1 M HCl
- Ethanol

Durchführung

- 300g wässrige Alternanlösung (10%) im Parr-Reaktor vorgelegt
- Zugabe von 4,62 ml 4M NaOH und Mischen mittels Turbinenrührer
- Verschließen des Reaktors und Aufheizen unter Rühren (150 U/min) auf 40°C
- Reaktionszeit 24 h bei 40°C
- Abkühlung auf Raumtemperatur unter Rühren
- Neutralisation mit 1 M HCl
- Dialyse mit Celluloseacetatmembran, 1 KD
- Ausfällung mit Ethanol
- Vakuumtrocknung

Ergebnis:DS 0,05

**2.2 Vorschrift 2**

Chemikalien:

- 4M NaOH
- 2,3-Epoxypropyltrimethylammoniumchlorid (Quab® 151) als wässrige Lösung mit einem Gehalt an Quab® 151 von 90%
- 1 M HCl
- Ethanol

Durchführung:

- 268,5 g $H_2O$ im Parr-Reaktor vorgelegt
- Einmischen von 30,0 g Alternan (atro) mittels Ultraturrax (Flügelrotor)
- Zugabe von 4,62 ml 4M NaOH und Mischen mittels Ultraturrax
- Zugabe von 13,79 ml Quab 151 und Mischen mittels Ultraturrax
- Verschließen des Reaktors und Aufheizen unter Rühren auf 70°C
- Rührzeit 4h bei 70°C
- Abkühlung unter Rühren auf Raumtemperatur
- Neutralisation mit 1 M HCl
- Dialyse mit Celluloseacetatmembran, 1 KD
- Ausfällung mit Ethanol
- Vakuumtrocknung

Ergebnis: DS 0.09

**3. Bestimmung des Substitutionsgrades (DS)**

Der Grad der Funktionalisierung mit quartären Ammoniumgruppen wurde mittels Elementaranalyse, abgekürzt als CHNS(N), bestimmt. Dabei wurde der Stickstoffgehalt über eine automatische Elementaranalyse mit einem FlashEA 1112 Elementar Analyzer Series CHNS/O mit Autosampler MAS200R von Thermo Finnigan durchgeführt. Die Nachweisgrenze der Methode beträgt 0,01% Stickstoff. Der DS-Wert wurde nach folgender Formel berechnet:

$$DS = 162 \times \%N / (100 \times M_N - \Delta M \times \%N)$$

%N - Stickstoffgehalt
$M_N$ - Molare Masse des Stickstoffs
$\Delta M$ - Molare Masse des Substituenten - Molare Masse des Protons der substituierten Hydroxidgruppe

**4. Bestimmung der Molmassenverteilung mittels GPC-MALLS**

| | |
|---|---|
| Geräte: | Alliance 2695 Separationsmodul der Fa. Waters, DRI-Detektor 2414 der Fa. Waters, MALLS - Detektor Dawn-HELEOS von Wyatt Technologie Inc., Santa Barbara, USA, Wellenlänge $\lambda$ = 658 nm und einer K5 Durchflusszelle |
| Säulen: | SUPREMA-Gel Säulensatz (PSS Mainz)<br>Vorsäule<br>Säule S30000 mit $10^8$-$10^6$,<br>Säule S1000 mit 2.$10^6$-5.$10^4$,<br>Säule S100 mit $10^5$- $10^3$ |
| Eluent: | 0,5 m $NaNO_3$ |
| Temperatur: | 30 °C |
| Lösung: | Die Proben wurden 0,2%ig in Wasser bei 24 h bei Raumtemperatur und 1 h bei 95°C gelöst und mit einem 5$\mu$m Membranfilter filtriert |

Auswertung: Astra Software 5.3.4.14

**5. Rheologische Charakterisierung**

Rheometer:

Es wurde das Rheometer Kinexus der Firma Malvern verwendet. Das Gerät hat folgende Spezifikationen:

Messysteme. Platte-Platte, Kegel-Platte, koaxialer Zylinder, Doppelspalt Drehmomentbereich von 0.05 $\mu$Nm bis 200 mNm; Auflösung des Drehmomentes 0.1 nNm
Frequenzbereich: 1 $\mu$Hz - 150 Hz
Temperaturbereich: -40 - 200 °C; Auflösung 0.01 °C

Herstellung der Lösungen

Die wässrige Lösung des funktionalisierten Alternans wurde in deionisiertem Wasser mit den jeweiligen Mengenverhältnissen für die Konzentration 60 Minuten bei Raumtemperatur gerührt.

Messung des Fließverhaltens

Die Viskosität wurde im Kegel-Platte Messsystem in Abhängigkeit von der Scherrate direkt nach der Lösungsherstellung gemessen.

Dynamische Rheologie

Mittels dynamischer Rheologie wird die Struktur einer Lösung oder Dispersion, eines Geles oder eines Festkörpers durch Messung des Speicher (G')- und Verlustmoduls (G") bzw. des elastischen und viskosen Anteils in Abhängigkeit von der Frequenz oder der Deformation gemessen. Diese Methode kam zur Anwendung, um G' und G" in Abhängigkeit von der Frequenz zu messen und aus dem Verlauf dieser Messdaten auf die Struktur des funktionalisierten Alternans in Wasser bei der jeweiligen Konzentration im Vergleich zum unsubstituierten Alternan zu evaluieren. Der gewählte Frequenzbereich lag zwischen 0,1 - 10 Hz.
Durchführung der rheologischen Messungen.
Messsystem: Kegel-Platte Messsystem
Konzentration der wässrigen Lösungen 3-10%
Temperatur: 25 °C
Die Methodik für die rheologische Charakterisierung war folgende:

- Fließverhalten im Bereich der Scherrate zwischen 1 und 100 $s^{-1}$
- Frequenzsweep von 1-10 Hz

**6. Bestimmung der des Adsorptionsverhaltens von kationischem Alternan an einem Papierfaserstoff**

Ein Papierfaserstoff wurde in einer wässrigen Lösung des mit quartären Ammoniumgruppen funktionalisierten Alteran-Polysaccharids (kationisches Alternan) mit dem DS Wert 0,09 folgendermaßen behandelt:

- Eine Stammlösung mit dem kationischen Alternan wurde 0,5%ig in 0,01 M NaCl angesetzt.
- Der Faserstoff wurde per Hand kleingezupft und 1%ig in 0,01 M NaCl für eine Dauer von einer Stunde vorgequollen (+0,02% $NaN_3$)
- Anschließend erfolgte die Zugabe der jeweiligen Menge kationischen Alternans durch Dosierung des entsprechenden Volumens der Alternanstammlösung(1 % oder 2% kationisches Alternan bezogen auf den Faserstoffgehalt der Suspension)
- Die Adsorptionszeit betrug eine Stunde. Während dieser Zeit wurde die Suspension auf einem Schütteler bei 300 rpm bewegt
- Nach der Adsorption wurde der Faserstoff mit einem Sieb abgetrennt und das Filtrat mittels Gelpermeationschromatographie (GPC) untersucht
- Eine weitere Blind-Lösung wurde auf die gleiche Weise angesetzt und ohne die Zugabe von Faserstoff und mittels GPC untersucht, um die Ausgangskonzentration ($c_0$) zu bestimmen

Die Bestimmung der adsorbierten Alternanmenge erfolgte nach folgender Gleichung:

$$\Gamma = \frac{[c_0 - (c_E * F)] * V}{m}$$

| | | |
|---|---|---|
| $\Gamma$ | [mg/g] | adsorbierte Alternanmenge pro Gramm Faserstoff |
| $C_0$ | [µg/ml] | initiale Alternankonzentration |
| $C_E$ | [µg/ml] | Equilibriumkonzentration |
| m | [g] | Masse des Faserstoff |
| V | [l] | Volumen der Adsorptionslösung |

**C) Beispiele**

**1. Funktionalisierung mit quartären Ammoniumgruppen**

In der nachfolgenden Tabelle 1 sind die Ergebnisse der Funktionalisierung angegeben. Die Produkte der Synthesen wurden mit den wichtigsten Angaben zu ihrer Herstellung zusammengestellt.

Variiert wurden die Molverhältnisse von Alternanmonomer (Anhydroglucoseeinheit, AGE):Reagenz (R =Funktionalisierungsmittel):Alkalisierungsmittel NaOH, sowie die Reaktionsbedingungen, nämlich Temperatur und die Reaktionszeit. In die Bezeichnung des Alternanderivats wurde der erhaltene DS Wert aufgenommen. So bedeutet die Bezeichnung "Alt-kat-DS-0,02" ein mit quartären Ammoniumgruppen kationisch modifiziertes Alternan-Polysaccharid mit DS = 0,02. Als Reagenz wurde Quab 151, ein Glycidyltrimethylammoniumchlorid der Firma Quab Chemicals (www.quab.com), eingesetzt.

Tabelle 1:

| **Derivatbezeichnung** | **Reagenz** | **Molverhältnis AGE:R: NaOH** | **Bedingungen** | **Reaktionsmedium** |
|---|---|---|---|---|
| Alt-kat-DS-0,02 | Quab 151 | 1 : 0,1 : 0,5 | 24h 80 °C Parr-Reaktor | $H_2O$ |
| Alt-kat-DS-0,04 | Quab 151 | 1 : 0,2 : 0,5 | 24h 80 °C Parr-Reaktor | $H_2O$ |
| Alt-kat-DS-0,05 | Quab 151 | 1 : 0,2 : 0,1 | 24h 40 °C Parr-Reaktor | $H_2O$ |
| Alt-kat-DS-0,09 | Quab 151 | 1 :0,5:0,1 | 4h 70 °C Parr-Reaktor | $H_2O$ |

### 2. Herstellung wässriger Lösungen

Mit dem kationisch modifizierten Alternan wurden wäßrige 1% Lösungen bei Rautemperatur und bei 95° hergestellt. Die Lösungen waren homogen und wiesen kaum Sedimentationen auf und unterschieden sich visuell in ihrer Transparenz. Die Unterschiede in der Transparenz wurden im Vergleich zur Ausgangsprobe spektralphotometrisch bei einer Wellenlänge von 650 nm gemessen. Die nachfolgende Tabelle gibt eine Übersicht der Messdaten. Mit Ausnahme von Probe Alt-CM-DS-0.06, die als "Ausreißer" betrachtet werden kann, wurde die Transparenz durch die Substitution signifikant erhöht.

Tabelle 2: Transparenz von kationischem Alternan-Polysaccharid in Lösung

| Probe | Transparenz bei 650 nm, c = 1% | |
|---|---|---|
| | nach Lösungsherstellung bei 25 °C | nach Lösungsherstellung bei 95 °C |
| Alternan | 70,8 | 75,0 |
| Alt-kat-DS-0,02 | 86,1 | 86,6 |
| Alt-kat-DS-0,04 | 84,5 | 86,9 |
| Alt-kat-DS-0,05 | 90,9 | 93,4 |

### 3. Molekulare Charakterisierung

In der Fig. 1 ist die Molmassenverteilung von verschiedenen kationischen Alternanen dargestellt.

### 4. Rheologische Eigenschaften

Das mit quartären Ammoniumgruppen funktionalisierte kationische Alternan wurde hinsichtlich des Fließverhaltens in Abhängigkeit von der Scherrate und mittels dynamischer Rheologie bezüglich der Lösungsstruktur charakterisiert.

Durch Einführung quartärer Ammoniumgruppen wurden so stark viskositätsbildende Alternanderivate erhalten, dass die Messung 10%iger wässriger Lösungen nicht mehr möglich war und die Konzentration auf 3% erniedrigt werden musste. Die Viskositäten waren um mehrere Größenordnungen höher als bei der 10%igen Alternanlösung (Fig. 2). Ebenso erhöht waren die Werte für G' (Speichermodul) und G" (Verlustmodul). G' (Speichermodul) und G" (Verlustmodul) zeigten kaum noch eine Abhängigkeit von der Frequenz. Der Speichermodul wies sehr viel höhere Werte auf als der Verlustmodul (Fig. 3). Das ist der Nachweis eines Gelzustandes. Die kationischen Alternanether hoher Molmasse besaßen die Eigenschaft der Hydrogelbildung, was bei relativ niedrigen Substitutionsgraden überraschend war. Das Gel ist kein Partikel-Gel sondern wird aus überlappenden Makromolekülen gebildet.

### 5. Adsorptionsverhalten von kationischem Alternan an einem Papierfaserstoff

Fig. 4 zeigt Chromatogramme vor Adsorption und nach Berechnung der adsorbierten Menge von kationischem Alternan an einen Papierfaserstoff. Als Ergebnis wurde erhalten, dass die Menge an eingesetztem kationischem Alternan vollkommen identisch war mit dem adsorbierten kationischen Alternan. Das kationische Alternan wurde vollständig von der Papierfaser aufgenommen, wie in Fig. 4 gezeigt.

### 6. Spinnversuche

Dargestellt ist das Ergebnis der Untersuchung der Filamentbildung mit 10 und 12,5%-igen wässrigen Lösungen des Alternans.

Die Lösungen konnten durch eine Düse in ein Koagulationsbad, vergällten Ethanol enthaltend, gedrückt werden. Das Vermögen zur Koagulation wurde bei 0°C, Raumtemperatur und 70°C untersucht. Beim Austritt aus der Düse bildeten die Alternanlösungen keinen Strang, sondern bildeten Tropfen, die im Koagulationsbad bei jeder untersuchten Temperatur einen feinen weißen Niederschlag bildeten.

In weiteren Versuchen wurde die konzentrierte Alternanlösung extrudiert. Dabei bildete sich zunächst ein farbloser Strang, der direkt ins Koagulationsbad geleitet wurde. Der Strang wurde durch die Entwässerung weiß und zerfiel in kleine Partikel. Der Strang hatte keine mechanische Stabilität. Die Temperatur des Fällmediums hatte keinen signifikanten Effekt auf die Strangstabilität gezeigt.

Es war nicht möglich, mit Alternan eine fibrilläre Struktur herzustellen.

## Patentansprüche

1. Funktionalisiertes Alternan-Polysaccharid, **dadurch gekennzeichnet, dass** es protonierbare Stickstoffgruppen oder permanent positiv geladene Stickstoffgruppen als funktionelle Gruppen aufweist.

2. Funktionalisiertes Alternan-Polysaccharid nach Anspruch 1, **dadurch gekennzeichnet, dass** es Strukturen der Formel (I) aufweist:

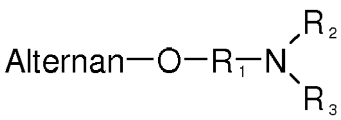

(I)

wobei

$R_1$ eine Kohlenwasserstoffgruppe mit 1 bis etwa 100 Kohlenstoffatomen ist, die ein oder mehrere Heteroatome aufweisen kann,
$R_2$ und $R_3$ jeweils Wasserstoff oder eine Kohlenwasserstoffgruppe mit 1 bis etwa 20 Kohlenstoffatomen, die ein oder mehrere Heteroatome aufweisen kann, sind, wobei $R_2$ und $R_3$ gleich oder unterschiedlich sein können. oder $R_2$ und $R_3$ zusammen mit dem Stickstoff, an den sie gebunden sind, einen 4-8 gliedrigen heterocyclischen Ring bilden, der mit einem oder mehreren weiteren isocyclischen oder heterocyclischen Ringen kondensiert sein kann, wobei der Stickstoff durch eine Doppelbindung an einen der $R_2$ oder $R_3$ gebunden sein kann und dann eine positive Ladung trägt,
wobei der Stickstoff in Formel (I) optional protoniert ist, und
wobei an dem Alternan eine oder mehrere der Gruppen $-R_1NR_2R_3$ vorhanden sein können und in mehreren solcher Gruppen die Reste $R_1$, $R_2$ und $R_3$ unabhängig voneinander gewählt sein können.

3. Funktionalisiertes Alternan-Polysaccharid nach Anspruch 1 oder 2, **dadurch gekennzeichnet, dass** es Strukturen der Formel (II) aufweist:

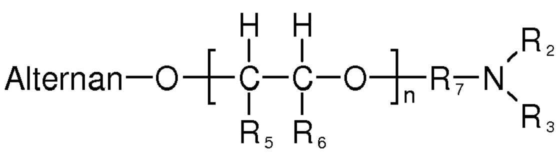

(II)

wobei $R_2$ und $R_3$ definiert sind wie in Anspruch 2 angegeben,
n eine ganze Zahl von 1 bis etwa 30 ist,
$R_5$ und $R_6$ ausgewählt sind aus H oder einer Kohlenwasserstoffgruppe mit 1 bis etwa 6 Kohlenstoffatomen, wobei $R_5$ und $R_6$ in den $-(CHR_5-CHR_6O)-$ Einheiten gleich oder verschieden sein können und jeder $R_5$ und $R_6$ in einer $-(CHR_5-CHR_6O)-$ Einheit unabhängig ausgewählt sein kann von jedem $R_5$ und $R_6$ in einer anderen $-(CHR_5-CHR_6-O)-$ Einheit,
$R_7$ eine Kohlenwasserstoffgruppe mit 1 bis etwa 10 Kohlenstoffatomen ist, die ein oder mehrere Heteroatome aufweisen kann,
wobei an dem Alternan eine oder mehrere der Gruppen $-[CHR_5-CHR_6-O]_nR_7NR_2R_3$ vorhanden sein können, und in mehreren solcher Gruppen die Zahl n und die Reste $R_2$ , $R_3$ , $R_5$, $R_6$ und $R_7$ unabhängig voneinander gewählt sein können,
und wobei der Stickstoff in Formel (II) optional protoniert ist.

4. Funktionalisiertes Alternan-Polysaccharid nach Anspruch 1, **dadurch gekennzeichnet, dass** es Strukturen der Formel (III) aufweist:

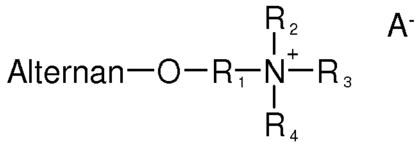

(III)

wobei

$R_1$ eine Kohlenwasserstoffgruppe mit 1 bis etwa 100 Kohlenstoffatomen ist, die ein oder mehrere Heteroatome aufweisen kann,
$R_2$, $R_3$ und $R_4$ jeweils eine Kohlenwasserstoffgruppe mit 1 bis etwa 20 Kohlenstoffatomen, die ein oder mehrere Heteroatome aufweisen kann, sind, wobei $R_2$, $R_3$ und $R_4$ gleich oder unterschiedlich sein können,
wobei an dem Alternan eine oder mehrere der Gruppen $-R_1N^+R_2R_3R_4$ vorhanden sein können, und in mehreren solcher Gruppen die Reste $R_1$, $R_2$ , $R_3$ und $R_4$ unabhängig voneinander gewählt sein können,
und $A^-$ ein Anion ist.

**5.** Funktionalisiertes Alternan-Polysaccharid nach Anspruch 1 oder 4, **dadurch gekennzeichnet, dass** es Strukturen der Formel (IV) aufweist:

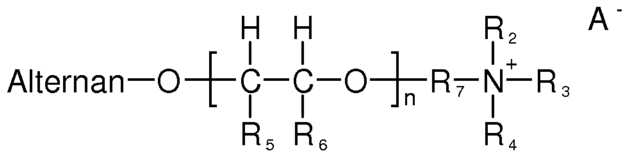

(IV)

wobei

n eine ganze Zahl von 1 bis etwa 30 ist,
$R_2$, $R_3$ und $R_4$ definiert sind wie in Anspruch 4 angegeben,
$R_5$ und $R_6$ ausgewählt sind aus H oder einer Kohlenwasserstoffgruppe mit 1 bis etwa 6 Kohlenstoffatomen, wobei $R_5$ und $R_6$ in den $-(CHR_5-CHR_6O)-$ Einheiten gleich oder verschieden sein können und jeder $R_5$ und $R_6$ in einer $-(CHR_5-CHR_6O)-$ Einheit unabhängig ausgewählt sein kann von jedem $R_5$ und $R_6$ in einer anderen $-(CHR_5-CHR_6-O)-$ Einheit,
$R_7$ eine Kohlenwasserstoffgruppe mit 1 bis etwa 10 Kohlenstoffatomen ist, die ein oder mehrere Heteroatome aufweisen kann,
und wobei an dem Alternan eine oder mehrere der Gruppen $-[CHR_5-CHR_6-O]_nR_7N^+R_2R_3R_4$ vorhanden sein können, und in mehreren solcher Gruppen die Zahl n und die Reste $R_2$ , $R_3$ , $R_4$, $R_5$, $R_6$ und $R_7$ unabhängig voneinander gewählt sein können,
und $A^-$ ein Anion ist.

**6.** Funktionalisiertes Alternan-Polysaccharid nach einem der vorangehenden Ansprüche, das außerdem eine oder mehrere Gruppen der Formel (V) aufweist

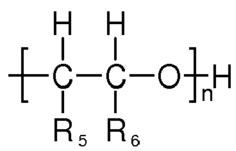

(V)

wobei die Gruppe der Formel (V) über eine Etherbrücke mit dem Alternan-Polysaccharid verbunden ist,

n eine ganze Zahl von 1 bis etwa 30 ist,
$R_5$ und $R_6$ ausgewählt sind aus H oder einer Kohlenwasserstoffgruppe mit 1 bis etwa 6 Kohlenstoffatomen, wobei $R_5$ und $R_6$ in den $-(CHR_5-CHR_6O)-$ Einheiten gleich oder verschieden sein können und jeder $R_5$ und $R_6$ in einer $-(CHR_5-CHR_6O)-$ Einheit unabhängig ausgewählt sein kann von jedem $R_5$ und $R_6$ in einer anderen

-($CHR_5$-$CHR_6$-O)- Einheit.

**7.** Funktionalisiertes Alternan-Polysaccharid nach einem der vorangehenden Ansprüche, das ein Gewichtsmittel des Molekulargewichts Mw im Bereich von größer als 3.000 g/mol bis 60.000.000 g/mol aufweist.

**8.** Funktionalisiertes Alternan-Polysaccharid nach einem der vorangehenden Ansprüche, **dadurch gekennzeichnet, dass** die durchschnittliche Anzahl funktionalisierter Hydroxylgruppen des Alternans pro Anhydroglucoseeinheit 0,02 bis 3 beträgt.

**9.** Funktionalisiertes Alternan-Polysaccharid nach einem der vorangehenden Ansprüche, **dadurch gekennzeichnet, dass** es vernetzt ist.

**10.** Funktionalisiertes Alternan-Polysaccharid nach einem der vorangehenden Ansprüche, **dadurch gekennzeichnet, dass** es weiterhin anionische Gruppen aufweist.

**11.** Funktionalisiertes Alternan-Polysaccharid nach einem der vorangehenden Ansprüche, **dadurch gekennzeichnet, dass** es wasserlöslich ist.

**12.** Funktionalisiertes Alternan-Polysaccharid nach einem der vorangehenden Ansprüche, **dadurch gekennzeichnet, dass** es nicht mikrostrukturiert, insbesondere nicht mikrofibrillär, ist.

**13.** Verfahren zur Funktionalisierung von Alternan-Polysaccharid mit protonierbaren Stickstoffgruppen oder permanent positiv geladenen Stickstoffgruppen, wobei Alternan in einem flüssigen Reaktionsmedium mit einem Funktionalisierungsmittel, das eine solche Stickstoffgruppe aufweist, unter Zusatz einer alkalischen Komponente umgesetzt wird.

**14.** Verfahren nach Anspruch 13, wobei das flüssige Reaktionsmedium ausschließlich oder vorwiegend einen Alkohol aufweist.

**15.** Zusammensetzung, insbesondere kosmetische Zusammensetzung, pharmazeutische Zusammensetzung, Wundschutzmittel, Ultraschallgel, Beschichtungsmittel, Reinigungs- oder Waschmitteladditiv, Schlichtungsmittel für Textilfasern, Symplexbildner, Bindemittel, Mittel zur Papierherstellung oder Papierbehandlung, Mittel zur Wasserbehandlung, Bohrflüssigkeit, Nahrungsmittel, Nahrungsmittelzusatzstoff, Adsorbenz, Biozid, Verkapselungsmittel, agrartechnische Zusammensetzung, Komplexierungsmittel, Emulgator, Tensid, Viskositätsregulator, Bindemittel, Leimungsmittel, Schutzkolloid, Dispersionsmittel, Ionenaustauscher, Wasserenthärter, Flockungsmittel, Trocknungshilfsmittel, Antikondensationshilfsmittel Bohrhilfsmittel, umfassend ein funktionalisiertes Alternan-Polysaccharid wie in einem der Ansprüche 1-12 genannt.

**16.** Verwendung eines funktionalisierten Alternan-Polysaccharids wie in einem der Ansprüche 1-12 genannt, als alleinige Komponente oder mit weiteren Bestandteilen, in einer kosmetischen Zusammensetzung, einer pharmazeutischen Zusammensetzung, einem Wundschutzmittel, einem Ultraschallgel, einem Beschichtungsmittel, einem Reinigungs- oder Waschmitteladditiv, einem Bindemittel, einem Mittel zur Papierherstellung oder Papierbehandlung, einem Mittel zur Wasserbehandlung, einer Bohrflüssigkeit, einem Nahrungsmittel, einem Nahrungsmittelzusatzstoff, einem Biozid, einem Verkapselungsmittel, einer agrartechnischen Zusammensetzung, einem Komplexierungsmittel, Emulgator, Tensid, Viskositätsregulator, Bindemittel, Leimungsmittel, Schutzkolloid, Dispersionsmittel, Ionenaustauscher, Wasserenthärter, Flockungsmittel, Trocknungshilfsmittel, Antikondensationshilfsmittel Schlichtungsmittel für Textilfasern, einem Simplexbildner oder einem Bohrhilfsmittel.

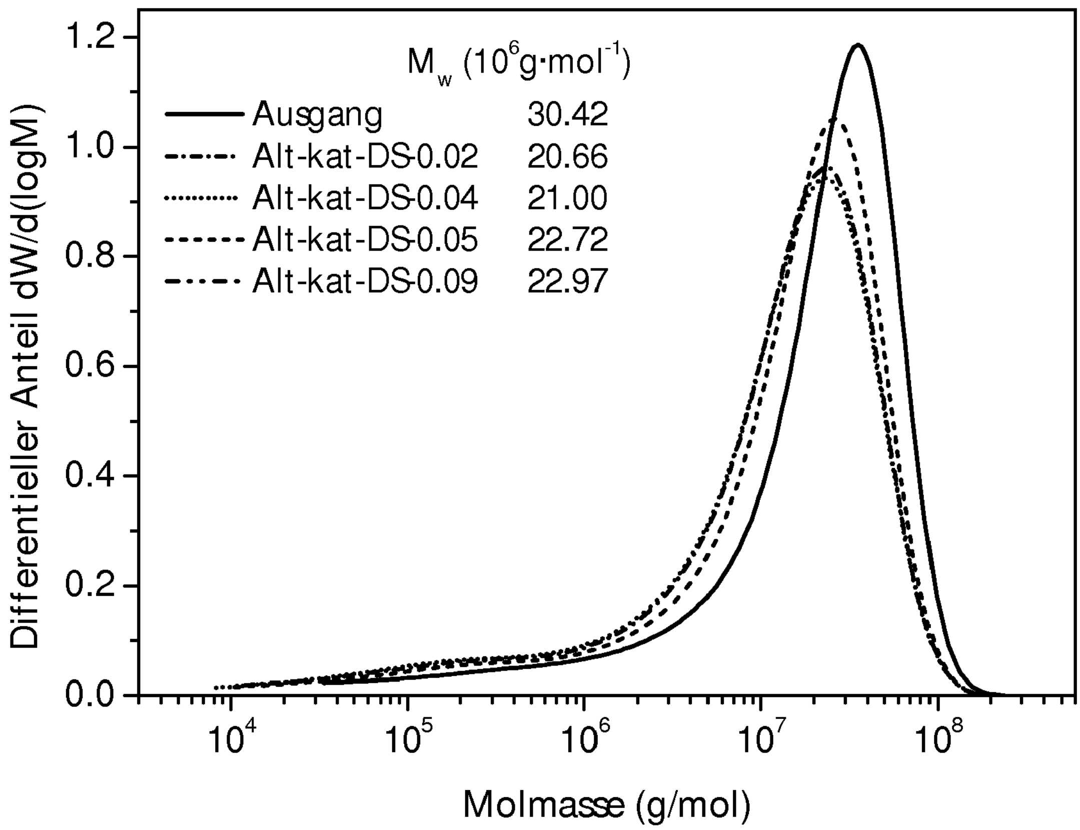

1.2
1.0
0.8
0.6
0.4
0.2
0.0
Differentieller Anteil dW/d(logM)
M_w (10^6 g·mol^-1)
Ausgang 30.42
Alt-kat-DS-0.02 20.66
Alt-kat-DS-0.04 21.00
Alt-kat-DS-0.05 22.72
Alt-kat-DS-0.09 22.97
10^4
10^5
10^6
10^7
10^8
Molmasse (g/mol)


Fig. 1

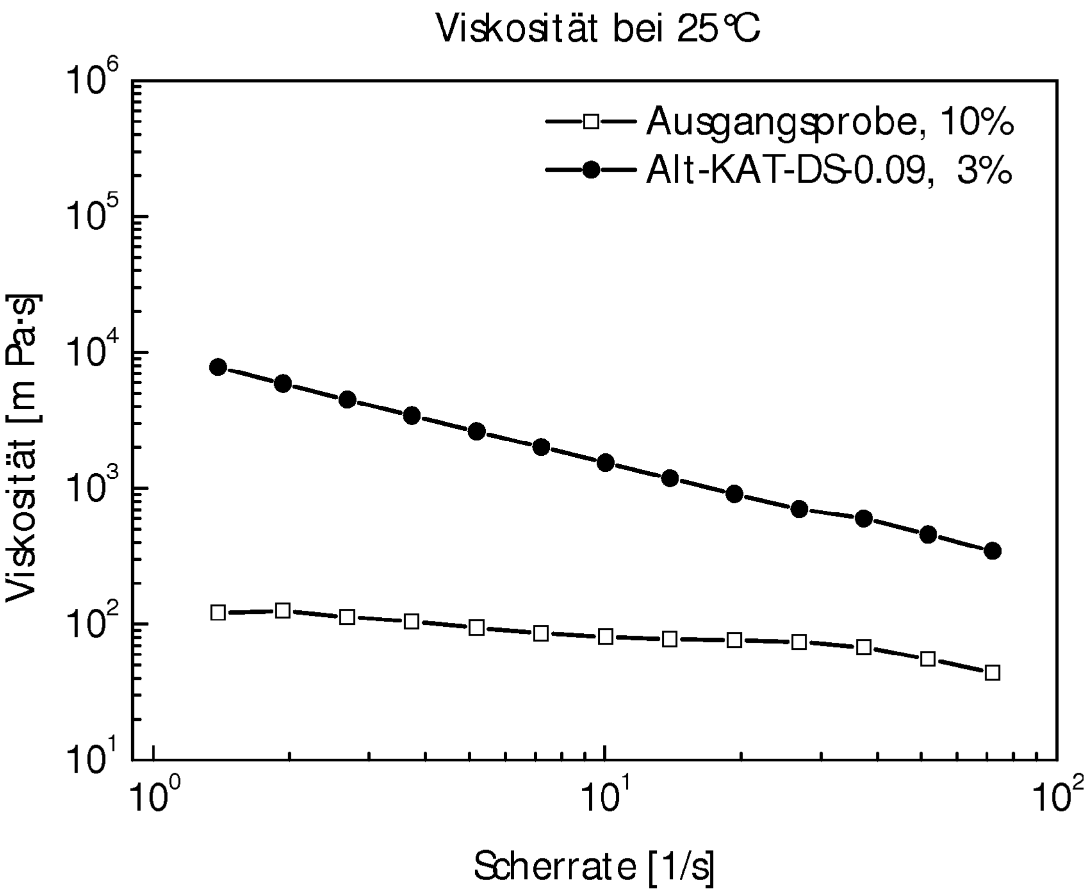
Viskosität bei 25°C
Ausgangsprobe, 10%
Alt-KAT-DS-0.09, 3%
Viskosität [m Pa·s]
Scherrate [1/s]
10^6
10^5
10^4
10^3
10^2
10^1
10^0
10^1
10^2

Fig. 2

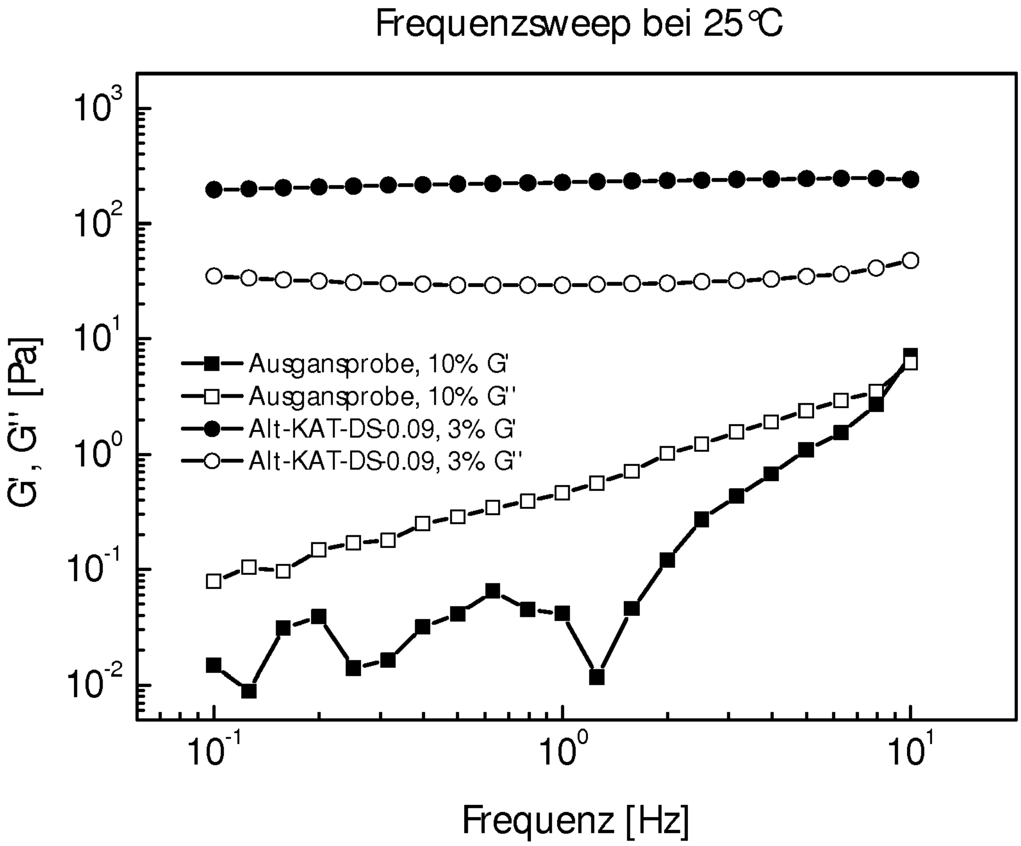
Frequenzsweep bei 25°C
10^3
10^2
10^1
10^0
10^-1
10^-2
G', G'' [Pa]
Ausgansprobe, 10% G'
Ausgansprobe, 10% G''
Alt-KAT-DS-0.09, 3% G'
Alt-KAT-DS-0.09, 3% G''
10^-1
10^0
10^1
Frequenz [Hz]

Fig. 3

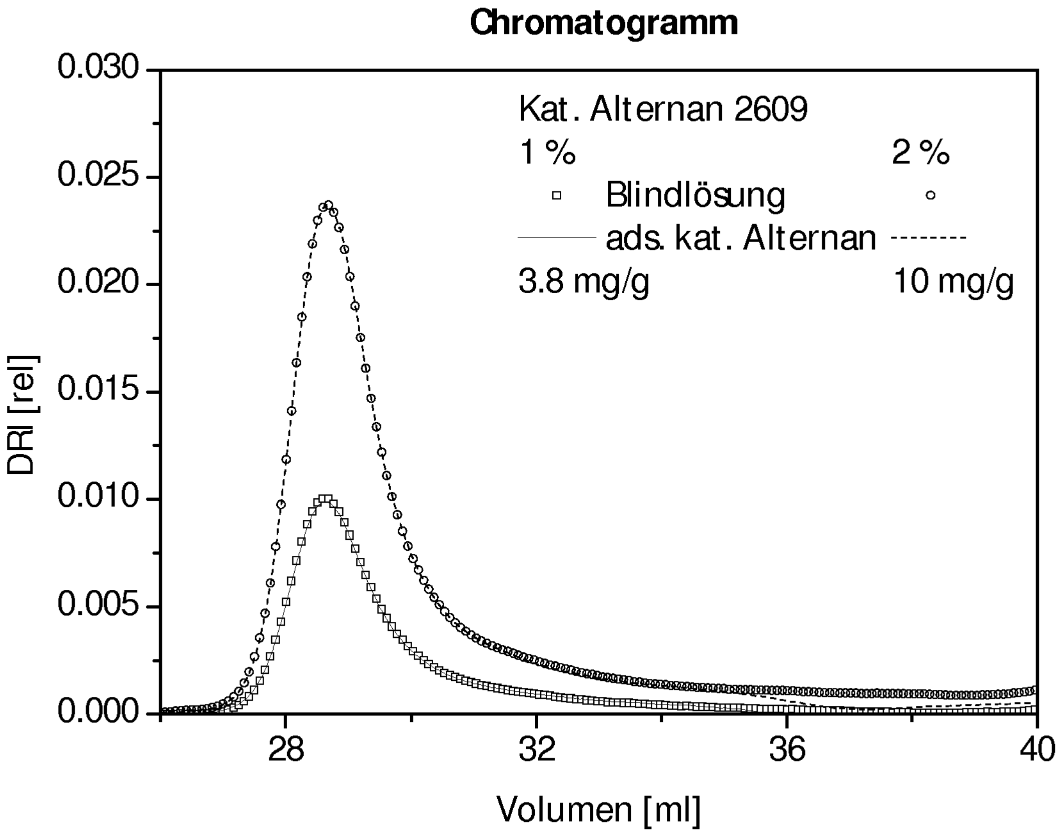
Chromatogramm
0.030
0.025
0.020
0.015
0.010
0.005
0.000
DRI [rel]
Kat. Alternan 2609
1 %
2 %
Blindlösung
ads. kat. Alternan
3.8 mg/g
10 mg/g
28
32
36
40
Volumen [ml]

Fig. 4

Europäisches Patentamt
European Patent Office
Office européen des brevets

# EUROPÄISCHER RECHERCHENBERICHT

Nummer der Anmeldung
EP 12 18 1751

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | G. L CÔTÉ: "Alternan", BIOPOLYMERS ONLINE, 15. Januar 2005 (2005-01-15), Seiten 1-56, XP002690492, DOI: DOI: 10.1002/3527600035.bpol5013 Gefunden im Internet: URL:http://onlinelibrary.wiley.com/doi/10.1002/3527600035.bpol5013/abstract> [gefunden am 2013-01-16] * Seite 36 * ----- | 1-16 | INV. C08B37/00 |
| Y | A. KATO ET AL.: "Functional protein-polysaccharide conjugate prepared by controlled dry-heating of ovalbumin-dextran mixtures", AGRICULTURAL AND BIOLOGICAL CHEMISTRY, Bd. 54, Nr. 1, 1. Januar 1990 (1990-01-01), Seiten 107-112, XP055049906, * Zusammenfassung * ----- | 1-16 | |
| Y | Y.-T. HO ET AL.: "Improving emulsifying activity of epsilon-polylysine by conjugation with dextran through the Maillard reaction", FOOD CHEMISTRY, Bd. 68, 2000, Seiten 449-455, XP055049899, * Zusammenfassung * * Seite 449 * ----- -/-- | 1-16 | RECHERCHIERTE SACHGEBIETE (IPC): C08B |

Der vorliegende Recherchenbericht wurde für alle Patentansprüche erstellt

| Recherchenort | Abschlußdatum der Recherche | Prüfer |
|---|---|---|
| München | 17. Januar 2013 | Lanz, Sandra |

2

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 12 18 1751

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X | CHANG P S ET AL: "OXIDATION OF PRIMARY ALCOHOL GROUPS OF NATURALLY OCCURRING POLYSACCHARIDES WITH 2,2,6,6-TETRAMETHYL-1-PIPERIDINE OXOAMMONIUM ION", JOURNAL OF CARBOHYDRATE CHEMISTRY,, Bd. 15, Nr. 7, 1. Januar 1996 (1996-01-01), Seiten 819-830, XP000920680, ISSN: 0732-8303<br>* Abbildung 2; Tabelle 1 *<br>----- | 1-16 | |
| A | BRAGD P L ET AL: "Bromide-free TEMPO-mediated oxidation of primary alcohol groups in starch and methyl alpha-d-glucopyranoside", CARBOHYDRATE RESEARCH, PERGAMON, GB, Bd. 328, Nr. 3, 22. September 2000 (2000-09-22), Seiten 355-363, XP027210764, ISSN: 0008-6215 [gefunden am 2000-09-22]<br>* Schema 4; Seite 362, rechte Spalte, Absatz 2 *<br>----- | 1-16 | RECHERCHIERTE SACHGEBIETE (IPC) |
| X | US 5 786 196 A (COTE GREGORY L [US] ET AL) 28. Juli 1998 (1998-07-28)<br>* Spalte 14, Zeilen 39-44,59-63; Beispiel 1 *<br>----- | 1-16 | |
| | -/-- | | |

Der vorliegende Recherchenbericht wurde für alle Patentansprüche erstellt

| Recherchenort | Abschlußdatum der Recherche | Prüfer |
|---|---|---|
| München | 17. Januar 2013 | Lanz, Sandra |

2

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 12 18 1751

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | AHMAD M A ET AL: "Optimization of preparation conditions for mangosteen peel-based activated carbons for the removal of Remazol Brilliant Blue R using response surface methodology", CHEMICAL ENGINEERING JOURNAL, ELSEVIER SEQUOIA, LAUSANNE, CH, Bd. 165, Nr. 3, 15. Dezember 2010 (2010-12-15), Seiten 883-890, XP027526123, ISSN: 1385-8947 [gefunden am 2010-11-24] * Abbildung 1 * ----- | 1-16 | |
| X | D. S. H. SHAH ET AL: "Conserved Repeat Motifs and Glucan Binding by Glucansucrases of Oral Streptococci and Leuconostoc mesenteroides", JOURNAL OF BACTERIOLOGY, Bd. 186, Nr. 24, 2. Dezember 2004 (2004-12-02), Seiten 8301-8308, XP055050055, ISSN: 0021-9193, DOI: 10.1128/JB.186.24.8301-8308.2004 * Zusammenfassung * * Seite 8303, linke Spalte, Absatz 1 * ----- | 1-16 | RECHERCHIERTE SACHGEBIETE (IPC) |
| A | DIDIER DELABOUGLISE ET AL: "Biotin grafting on boron-doped diamond", CHEMICAL COMMUNICATIONS, Nr. 21, 1. Januar 2003 (2003-01-01), Seite 2698, XP055049722, ISSN: 1359-7345, DOI: 10.1039/b308185k * Abbildung 2 * ----- -/-- | 1-16 | |

Der vorliegende Recherchenbericht wurde für alle Patentansprüche erstellt

2

| Recherchenort | Abschlußdatum der Recherche | Prüfer |
|---|---|---|
| München | 17. Januar 2013 | Lanz, Sandra |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 12 18 1751

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| A | BAYER E A ET AL: "Biocytin hydrazide-A selective label for sialic acids, galactose, and other sugars in glycoconjugates using avidin-biotin technology", ANALYTICAL BIOCHEMISTRY, ACADEMIC PRESS INC, NEW YORK, Bd. 170, Nr. 2, 1. Mai 1988 (1988-05-01), Seiten 271-281, XP024820496, ISSN: 0003-2697, DOI: 10.1016/0003-2697(88)90631-8 [gefunden am 1988-05-01] * Abbildung 1 * ----- | 1-16 | |
| A | Scott et al.: "Characterization of dextrans by the optical rotation of their cuprammonium complexes", Journal of the American Chemical Society, Bd. 79 1957, Seiten 1178-1182, XP055049891, Gefunden im Internet: URL:http://pubs.acs.org/doi/pdf/10.1021/ja01562a039 [gefunden am 2013-01-16] * Probe 13; Tabelle I * ----- | 1-16 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 17. Januar 2013 | Lanz, Sandra |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

2

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 12 18 1751

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-01-2013

| Im Recherchenbericht angeführtes Patentdokument | Datum der Veröffentlichung | Mitglied(er) der Patentfamilie | Datum der Veröffentlichung |
|---|---|---|---|
| US 5786196 A | 28-07-1998 | US 5786196 A | 28-07-1998 |
| | | US 5888776 A | 30-03-1999 |
| | | US 5889179 A | 30-03-1999 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 0047727 A
- US 5702942 A
- US 20060127328 A
- EP 2008051760 W
- WO 2010043423 A1
- WO 0047628 A
- WO 2006088884 A
- WO 200047727 A
- US 2003229923 A


### In der Beschreibung aufgeführte Nicht-Patentliteratur


- **JEANES et al.** *J. Am. Chem. Soc.,* 1954, vol. 76, 5041-5052
- **MISAKI et al.** *Carbohydr. Res.,* 1980, vol. 84, 273-285
- **COTE ; ROBYT.** *Carbohydr. Res.,* 1982, vol. 101, 57-74
- **COTE.** *Carbohydrate Polymers,* 1992, vol. 19, 249-252
- International Cosmetic Ingredient Dictionary and Handbook. CTFA, Januar 2006
- **REAMAKERS et al.** *J. Chem. Tech. Biotechnol.,* 1997, vol. 69, 470-478
- **JOUCLA et al.** *FEBS Letters,* 2006, vol. 580, 763-768